# DEMANDE DE BREVET EUROPEEN

(11) **EP 1 967 484 A1**
(43) Date de publication de la demande: **10.09.2008**
(21) Numéro de dépôt: 08370007.0
(22) Date de dépôt: 04.03.2008
(51) Int. Cl.: B66F 9/06, B66F 9/12, B62B 3/06

(54) **Dispositif de manutention motorisée horizontale et collective de palettes pour charger ou décharger les véhicules**

(30) Priorité: 05.03.2007 FR 0701594
(71) Demandeur: Le Roy, Yvon, 59940 Le Doulieu (FR)
(72) Inventeur: Le Roy, Yvon, 59940 Le Doulieu (FR)

(57) **Abrégé**

L'invention concerne un dispositif formé d'éléments motorisés soulevant et déplaçant des palettes chargées en rangs dans un véhicule, par son accès unique arrière, en une seule opération. L'appareil est constitué d'au moins une paire de liens d'entrainement flexibles (1), introduits sous chaque rangée, comportant des modules tracteurs (2) de levage, des modules (3) de levage, à déplacement relatif motorisé par rapport aux liens d'entrainement (1), reliés les uns aux autres en énergie et commande, par des moyens d'alimentation (11) ou (12) s'adaptant aux formats de palette et aux écarts entre elles. Ces liens flexibles (1) sont pilotés par un tracteur mobile pouvant les contenir.

## Description

La présente invention concerne un dispositif de manutention motorisée horizontale et collective de palettes pour charger ou décharger les véhicules routiers tels que camions, semi-remorques, fourgons, containers sur remorque, par leur accès arrière, sans limitation d'usage à ces seuls véhicules de transport ou contenants.

La manutention des palettes pour le chargement et le déchargement des véhicules de transport routier se fait traditionnellement au niveau des entrepôts de regroupement, de stockage ou de distribution, à partir de quais d'accueil des véhicules de transport, pour en sortir ou y entrer une grande quantité de palettes chargées, en nombre variable à l'intérieur, selon le format des palettes et leur orientation, ce qui représente un flux très important de palettes passant au niveau de ces quais, implantés également en nombre important, eux aussi, pour l'accueil des véhicules de transport, notamment dans les structures logistiques professionnelles organisant la distribution de grands flux de denrées et de marchandises.

L'entrée ou la sortie du flux de palettes à partir de remorques, fourgons ou plates-formes bâchées ou entourées de cloisons rigides comme dans les transports frigorifiques, se fait traditionnellement pour la grande majorité de la flotte routière, par la porte arrière, unique accès possible si les cloisons sont inamovibles, au moyen de chariots élévateurs à fourches, ou de transpalettes, dont les différents modèles répondent à des exigences variées selon la charge, le format, la hauteur de gerbage, l'agencement des magasins de rangement de l'entrepôt, ces engins devant entrer eux-mêmes dans le camion, ce qui limite leur poids, leur encombrement.

L'une des caractéristiques communes à ces moyens est qu'ils ne peuvent prendre en charge au maximum qu'une à deux palettes à la fois, en hauteur, si la charge n'est pas trop importante ou une à deux en longueur ou une à trois en largeur, au maximum et non simultanément, à la condition que les fourches du chariot le permettent, ainsi que sa charge admissible en porte-à-faux et que le poids total en charge du chariot soit admissible pour les suspensions du véhicule de transport à charger ou décharger.

Selon certaines formes de réalisation, par exemple selon le document US 3070248 ou le document US 3709394, des fourches télescopiques permettent de prendre plusieurs palettes. Ces fourches sont constituées de chaînes formées de maillons se bloquant en arc-boutement en position horizontale. Cependant leurs longueurs restent limitées par la charge à déplacer en porte-à-faux, elle-même limitée par la tenue des articulations des maillons en arc-boutement et par le poids et l'encombrement du chariot porteur à contrepoids. Dans ces deux exemples, la charge est soulevée par des fourches qui ne sont pas elles-mêmes en appui au sol, ce qui limite la charge et le nombre de palettes manipulables.

Cette solution de chaine à maillon est également évoquée dans le document WO 9613457, où l'on peut apercevoir un tel moyen rétractable dans le tablier d'un chariot transpalette.

Le document GB 902898 propose une solution avec roues d'appui au sol et s'adapte seulement au format d'une seule palette. Certains transpalettes ont des roues d'appui au sol pour soulever la charge, mais les longueurs des fourches sont fixes et limitées à la longueur de deux palettes maximum.

Cependant, selon le document récent FR 2890064 publié en Mars 2007, une solution existe et se trouve en capacité de prendre tout ou partie d'un chargement complet sous forme de palettes. Elle est constituée d'au moins une paire de liens d'entrainement, formant deux trains d'éléments s'étendant horizontalement en chaîne et en lignes parallèles, destinés au levage vertical et au déplacement d'un chargement constitué de rangées de palettes alignées. C'est par traction ou poussage sur les dites chaines qu'on manipule une rangée ou même le chargement.

Ces liens d'entrainement comprennent chacun des ensembles modulaires de levage vertical et de déplacement, équipés chacun de moyens propres de levage par appui au sol, de format variable adapté au format utilisé de longueur horizontale de palette. Chaque ensemble modulaire est équipé de moyens propres d'expansion, pour se régler au format voulu de la palette. Entre ces ensembles modulaires, pour les articuler entre eux, un maillon de liaison, de longueur horizontale également variable, adaptée à l'écartement voulu entre palettes, est doté d'un moyen propre de réglage de longueur.
l'ensemble forme ainsi un train d'éléments articulés, au moyen duquel on lève et déplace simultanément d'une seule masse, en roulant au sol, les palettes ordonnées du chargement, après introduction de ces liens d'entrainement sous le chargement, par un tracteur qui les porte et peut également les emmagasiner sur tambours, à leur retrait.

Cependant, pour les charges longues sur palettes avec traverses éventuelles, ayant la longueur maximum d'une remorque de camion, la seule possibilité actuelle pour les charger ou décharger est de passer par le coté long de la remorque ce qui exige qu'elle puisse être accessible par le coté, après démontage de la bâche, des ridelles, voire des rehausses, ce qui exige du temps et de la main d'oeuvre. Si la porte arrière reste l'accès unique du véhicule de transport, ce type de charge ne peut être chargé, sauf à utiliser des moyens spécifiques uniquement destinés à cet usage et non utilisable de manière intensive et générale pour des tâches plus courantes ou plus variées.

Charger une charge longue par l'arrière ou prendre davantage de palettes à la fois, notamment si les formats de palettes peuvent s'avérer nettement différents tout en restant homogènes dans un même chargement, avec le même moyen de levage et de déplacement relève pratiquement de l'impossibilité avec les moyens décrits peu adaptés ou assez peu adaptatifs.

Pour aller dans ce sens, on peut faire remarquer que, dans le document FR 2890064, le dispositif d'expansion prévu des modules de levage et de déplacement soit limité dans l'application même de son principe pourtant utile, par son encombrement nécessairement limité à la place que lui attribuent en largeur les normes des entrées de palettes, ce qui limite nettement l'application du tel dispositif.

L'écartement simple des modules de levage, à l'intérieur d'un module de levage et de déplacement semble limité en expansion par la solution choisie de l'actionneur central commandant un mécanisme à double expansion, expansion limitée par la structure même du module composé de poutres coulissantes entre elles et ne peut s'appliquer qu'à des formats obligatoirement présélectionnés de palettes et nécessairement proches l'un de l'autre, et ne peut en aucune manière s'appliquer indistinctement à tous les formats courants de palettes, notamment en longueur dans le cas de palettes très courtes jusqu'à de très longs modèles. La traduction en dimensions réelles de ce principe, dans le respect des normes de sections disponibles pour l'introduction des fourches dans les palettes, ne permettrait qu'une expansion de l'ordre d'une vingtaine de centimètres, ce qui est insuffisant pour couvrir les besoins totaux de variation entre formats.

De même, on peut également remarquer que la solution décrite dans le document FR 2890064 relative à l'écartement variable entre palettes ne permet pas un écartement important ou un rapprochement de palettes qui seraient éloignées pour faciliter le déchargement ou le chargement des palettes dans le véhicule de transport. Là encore, la solution choisie, utile dans son principe, reste limitée dans son application par le choix du type de moyen d'expansion, dont les caractéristiques sont très limitées par l'encombrement disponible aux entrées de palettes, selon les normes en vigueur pour les fourches et les transpalettes. Ce qui permettrait en pratique, une possibilité réelle de réglage inférieure à 100 millimètres, valeur paraissant insuffisante pour son usage réel.

Selon le même document FR 2890064, il semble que le réglage d'écartement entre palettes, lorsque celles-ci sont soulevées par les moyens propres de levage, se fasse par traction ou par poussage des dites palettes par le tracteur en bout de liens d'entrainement, les actionneurs d'expansion des maillons de liaison entre modules de levage des palettes n'étant présents que pour le réglage avant levage, de l'écart entre palettes.

Dans la solution présentée au document FR 2890064, on peut également remarquer la dépendance entre eux des écarts entre palettes, chaque moyen d'expansion entre palettes devant tracter ou pousser au moment d'un réglage, l'ensemble des modules portant les palettes et les maillons articulés qui les relient, toutes solutions d'expansion du module de levage et de déplacement ou du maillon de liaison, dont le dimensionnement doit être en capacité d'assurer ces déplacements en charge.

On y note également que les écarts entre palettes ne sont pas indépendants les uns des autres dans leur réglage, rendant difficile le positionnement relatif d'une palette par rapport à ses voisines. D'autre part, les tractions ou poussage se font sur l'ensemble des liaisons entre modules porteurs et à l'intérieur de ceux-ci, sollicitant de manière importante les pièces mécaniques qui les constituent.

Le dispositif selon l'invention permet de remédier à ces inconvénients majeurs qui limitent la possibilité de préhension des palettes, qui limitent l'écartement ou le rapprochement des dites palettes, leur positionnement dans la rangée, notamment lorsqu'elles se trouvent soulevées.

Selon une première caractéristique, il comporte en effet au moins deux liens d'entrainement flexibles (1), dentés ou crantés, introduits en parallèle simultanément sous une même rangée de palettes alignées, chacun par au moins un module tracteur (2) de levage, à déplacement motorisé au sol, les dits modules (2) déplaçant les liens d'entrainement flexibles (1) au moins par leur extrémité libre, lesdits liens d'entrainement étant, en outre, équipés chacun d'au moins un module (3) de levage à déplacement relatif motorisé, chacun desdits modules (2) ou (3) comportant en propre pour cela, en première part, un moyen de levage motorisé (34, 31, 33, 30), en seconde part, un moyen moteur de déplacement (23) ou (4), en troisième part pour lesdits modules (3), une plaque frein (50), pour freiner ou stopper sur les liens flexibles (1) le déplacement relatif desdits modules (3), se déplaçant de manière individuelle et indépendante des autres modules (3), pour les positionner sous chacune des palettes à déplacer et pour régler individuellement leur distance mutuelle, l'ensemble des moyens moteurs (23,4), des plaques freins (50) desdits modules (3) portant une même palette, concourant au déplacement motorisé de celle-ci, indépendamment des palettes voisines, ou au déplacement collectif des palettes solidaires des liens d'entrainement flexibles (1), éventuellement par traction sur les dits liens d'entrainement (1).

Ce qui signifie, par rapport aux solutions exposées notamment dans le document FR 2890064, que l'écartement des modules (3) suivant les modules tracteurs (2) de tête, n'est plus tributaire d'un moyen d'écartement limité, comme celui décrit dans le dit document, mais que cet écartement ne dépend plus que des positions relatives non limitées entre modules (3), ce qui permettra de placer les dits modules (3) pour qu'ils puissent lever au mieux une palette de la rangée de palettes, dans la position qu'elle occupe, indépendamment de la distance existante entre elles.

De même, pour un déplacement collectif, après avoir positionné les modules tracteurs (2) et les modules de déplacement relatif (3) sous les palettes, après les avoir levées, l'ensemble des moyens moteurs desdits modules pourront collaborer pour déplacer collectivement toutes les palettes d'une même rangée.

Dans le détail, le dispositif comporte en effet au moins deux liens d'entrainement flexibles (1), dentés ou crantés, de type courroie crantée ou chaîne à maillons, à pas régulier pour entrainement par obstacle, introduits en parallèle, horizontalement et simultanément sous une même rangée de palettes alignées, chacun, au moins par un module tracteur (2) de levage, à déplacement motorisé au sol, équipé en propre pour cela, d'un moyen moteur (23), les dits modules (2) déplaçant les liens d'entrainement flexibles (1) par leur extrémité libre, lesdits liens d'entrainement étant, en outre, équipés chacun d'au moins deux modules (3) de levage, à déplacement relatif motorisé par rapport au lien d'entrainement flexible (1), chacun comportant en propre pour cela, en première part, un mécanisme de levage actionné par un actionneur (30), en seconde part, un moyen moteur (4) de déplacement par rapport au lien d'entrainement flexible (1) qui le traverse, en troisième part, une plaque frein (50), comportant par exemple des dentures, pour stopper selon nécessité d'usage ce déplacement relatif, chacun des dits modules (3) se déplaçant, soit relativement par rapport au lien d'entrainement flexible (1), soit étant solidaire du dit lien d'entrainement flexible (1) par l'usage de la dite plaque frein (50), de manière individuelle et indépendante des autres modules (3), pour se positionner sous chacune des palettes à déplacer avant leur levage dans la rangée de palettes, et après levage des palettes, pour régler individuellement leur écartement ou leur rapprochement, l'ensemble des moyens moteurs (4), des plaques freins (50) des modules (3) de levage portant une même palette, concourant au déplacement motorisé de celle-ci, indépendamment des palettes voisines, ou au déplacement collectif des palettes solidaires des liens d'entrainement flexibles (1), éventuellement, mais sans obligation, par traction sur les dits liens d'entrainement (1).

Dans le déplacement collectif des palettes, lors des opérations de chargement ou de déchargement d'une rangée sur une plateforme de transfert, l'indépendance de comportement dynamique des palettes doit être obtenue pour éviter toute interaction de charges ou d'inertie entre elles, notamment pour des oscillations résultant des changements d'état, des décalages verticaux ou des changements d'inclinaison de plans de roulement.

Les découplages nécessaires, déjà signalés dans le document FR 2890064, y était obtenu par des articulations du maillon de liaison avec les modules de levage et de déplacement. Cette solution devait permettre seulement certains mouvements relatifs autorisés entre palettes, en particulier une ou plusieurs rotations d'axe horizontal perpendiculaire à la direction générale de chargement, utiles notamment lors d'un passage de rampe d'accès au véhicule de transport, une translation verticale relative des palettes, dans le cas de levage partiel des palettes de la rangée. On note cependant, que dans la solution du document FR 2890064, le découplage possible est limité par les amplitudes des articulations du maillon de liaison avec les modules attenants, de même que le décalage admissible en hauteur entre palettes semble également très limité par ces mêmes articulations et la longueur maximale du maillon expansible intermédiaire.

Dans le présent dispositif de manutention motorisée horizontale et collective de palettes, les liens d'entrainement flexibles (1) peuvent jouer un rôle très important, notamment dans le fonctionnement général en introduction des dits liens, dans le comportement et le placement des modules de levage, mais également, lorsque les palettes sont déplacées collectivement par traction sur les dits liens. Ces liens d'entrainement flexibles (1) doivent être capables de s'adapter aux différences de hauteurs, aux différences d'inclinaison des palettes voisines, selon que les modules de levage qui les supportent soient en position haute ou non, ou sur une rampe, sans permettre de déplacement déviant par rapport à la direction générale de chargement.

Le dispositif selon l'invention permet de remédier à ces inconvénients qui limitent la possibilité de manutention des palettes.

Selon une deuxième caractéristique, chaque lien d'entrainement flexible (1) est constitué d'au moins un lien au moins souple verticalement, présentant des obstacles selon un pas régulier, capable de flexions cumulées d'axe horizontal perpendiculaire à la direction longitudinale du lien, lui-même longitudinalement rigide en traction et torsion, autorisant par lesdites flexions, des décalages parallèles verticaux et des inclinaisons, entre plans de palettes voisines d'une part, et d'autre part, limitant tout allongement longitudinal et toute déviation angulaire d'axe vertical perpendiculaire qui pourraient modifier la direction de déplacement des modules (2) et (3) de la rangée de palettes supportées par rapport à la direction générale du chargement.

Selon cette caractéristique, un lien d'entrainement flexible (1) serait, suivant un premier exemple, constitué d'une chaine à maillons réguliers articulés suivant un axe horizontal, la dite chaine étant rigide en torsion, ou, suivant un second exemple, constitué d'une courroie crantée ouverte de grande longueur, à section large, présentant une denture à pas régulier, souple en flexion entre les dentures transversales, supportant des flexions entre dentures successives, flexions d'axe horizontal perpendiculaire à la direction longitudinale de la courroie sans altérer ses fonctionnalités en traction ou celles de sa denture pour le positionnement des modules (3) de levage, à déplacement relatif motorisés par les moteurs (4), autorisant par ces flexions, des décalages parallèles verticaux et des inclinaisons relatives entre palettes voisines, limitant au mieux, par sa large section transversale et par son armature de câbles longitudinaux répartis dans la dite section, tout allongement longitudinal et toute déviation angulaire d'axe vertical perpendiculaire qui pourrait modifier la direction de déplacement des modules de la rangée de palettes supportées par rapport à la direction générale du chargement.

Le chargement étant constitué de palettes de format variable selon les usages, mais homogène pour le transport et le traitement des flux, il est nécessaire de positionner le dispositif de manutention afin que la charge de chacune des palettes soit levée individuellement de manière indépendante, pour éviter des interactions entre palettes, même si toutes les palettes sont levées ensemble simultanément et qu'elles soient ensuite déplacées ensemble comme une seule masse. Il faut donc que le moyen pour lever verticalement et déplacer les palettes puisse s'adapter au format des palettes.

Le document GB 902898 décrit déjà un dispositif capable de se modifier en longueur pour s'adapter au format de la palette, cependant il ne semble pouvoir soulever qu'une palette et non plusieurs. Son système de levage unique n'est pas disposé sous la palette, en plusieurs éléments porteurs en appui au sol, ce qui limite la possibilité de prise en charge de plusieurs palettes simultanément.

Selon le document FR 2890064, une solution adaptative à plusieurs formats proches de palette est décrite également mais reste limitée à quelques formats standard, grâce au module de levage et de déplacement expansible longitudinalement, mais cette solution ne semble pas facilement applicable à des formats hybrides ou trop éloignés les uns des autres, à cause d'une expansion limitée du module principal. Par la longueur des modules, elle semble également s'adapter plus difficilement aux formats présentant des traverses, notamment aux distances faibles et répétées entre traverses au sol. Il faudrait que l'écart de longueur entre la palette la plus courte et la palette la plus longue soit couvert par une solution présentant un moyen d'écartement, qui reste compatible avec la position des éventuelles traverses, disposées en général régulièrement sous la longueur de la palettes, cette distance étant naturellement une fraction de la longueur totale de la palette. Cela nécessite à la fois une solution très compacte en longueur pour se placer un moyen de levage et ses appuis dans les intervalles les plus courts existants entre traverses, mais exige en même temps un espacement entre moyens de levage, espacement à réglage important, pour atteindre les plus grandes dimensions des palettes existantes, ce qui semble incompatible avec le principe retenu selon le document FR 2890064.

Le dispositif selon l'invention permet de remédier à cet inconvénient.

Selon une troisième caractéristique, chaque module (3) de levage, à déplacement relatif motorisé par rapport au lien d'entrainement flexible (1), comporte un moyen moteur de déplacement (4) animant en rotation un rotor (5) comprenant au moins une roue à denture extérieure, s'engrenant dans la denture d'au moins un lien d' entrainement flexible (1) guidé longitudinalement dans la poutre supérieure (6) dudit module (3) qu'il traverse, pour l'entrainer en translation relative par rapport au dit lien d'entrainement flexible (1).

Grâce à cette caractéristique, le dispositif propose de placer sous chacune des palettes, grâce à leurs dimensions compactes compatibles avec les palettes les plus courtes en longueur, mais selon leur longueur, un à deux modules (3) de levage à déplacement motorisé par rapport au lien d'entrainement flexible (1), voire plus encore, si la longueur totale de la palette l'exige ou le permet, installés entre les traverses s'il en existe, selon le format, la longueur, la charge de la palette, sans limitation de longueur pour celle-ci et d'en régler les positions relatives par une solution indépendante de leur propre longueur.

On peut également, de la sorte, déplacer les modules (3) de levage et les palettes qu'ils supportent sur leurs roues (36) qui équipent les boggies (40), d'une part, les unes par rapport aux autres, en réglant ainsi l'espace entre palettes, en activant uniquement les moteurs (4) des modules (3) de levage, en charge d'une palette à déplacer par rapport à ses voisines, dont les modules (3) seraient inertes mais libres sur les liens d'entrainement flexibles (1), ce qui permet de les resserrer au chargement ou de les espacer au déchargement selon les besoins, et d'autre part, en déplaçant collectivement les palettes chargées par les dits modules (3) bloqués sur les liens d'entrainement flexibles (1), les dits modules (3) chargés de leurs palettes, se déplaçant sur leurs roues (36) par traction sur les liens d'entrainement flexibles (1).

Dans un mode particulier de réalisation, les moteurs (4) équipant les modules (3) de levage, à déplacement relatif motorisé par rapport au lien d'entrainement flexible (1), sont alimentés par un courant électrique, la commande de fonctionnement dans un sens ou l'autre ou même le débrayage du moteur (4) pouvant être commandé à distance par des ordres apportés, soit par des câbles spécifiques de commande, soit par le courant porteur lui-même qui alimente chaque moteur, chacun d'entre eux étant indexés pour la partie commande de l'ensemble des liens d'entrainement flexibles (1) équipés.

Dans un autre mode particulier de réalisation, chaque module (3) de levage, à déplacement relatif motorisé, comporte un moteur de déplacement (4) à fluides, de type à engrenage intérieur ou à palettes, dont le rotor (5) est une roue à dentures extérieure et intérieure, s'engrenant d'une part à l'extérieur, dans le lien d'entrainement flexible (1) guidé en translation longitudinalement dans la poutre supérieure (6) dudit module (3), et d'autre part, de l'intérieur, par l'engrenage formé avec le pignon denté (8) créant une zone d'étanchéité dynamique, qui permet de l'animer en rotation par la différence de pression entre les voies de fluides (9) et (10) alimentant le stator (7), solidaire de la poutre supérieure (6) dudit module (3) qu'elle entraine en translation relative par rapport au lien d'entrainement flexible (1).

L'alimentation en énergie des voies fluides (9) ou (10) dudit moteur permet d'entrainer le module (3) de levage à déplacement relatif motorisé par rapport au lien d'entrainement flexible (1), l'ensemble des dits modules (3) soulevant une même palette pouvant alors concourir à son déplacement par rapport aux palettes voisines, soulevées ou non, disposant elles aussi de modules (3) identiques, positionnés alors mutuellement en valeur relative par le même lien d'entrainement flexible (1) et permettant le déplacement collectif des palettes par traction amont ou aval sur les liens d'entrainement flexibles (1).

Selon un autre mode différent de réalisation, dans le cas d'une motorisation électrique pour le déplacement relatif des modules (3), on pourrait substituer à l'entrainement des modules (3) en déplacement relatif par rapport au lien flexible (1) par le moteur (4), un entrainement motorisé interne aux roulettes (22) des boggies (40), qui permettrait, selon l'état de la plaque frein (50), de déplacer les dits modules (3) par rapport au lien, par déplacement des roulettes (22) motorisées au sol. Dans le cas où la plaque frein rendrait solidaire le module (3) des liens flexibles (1) qui le traversent, la motorisation au sol par les roulettes pourrait participer à l'entrainement collectif des modules (3) tous solidaires desdits liens (1), notamment dans le cas où les palettes sont soulevées par les modules (3).

Effectivement, pour déplacer les palettes, il faut qu'elles soient soulevées par les modules (3) de levage à déplacement relatif motorisé par rapport au lien d'entrainement flexible (1), qui rouleront au sol. C'est également le but principal recherché dans la manutention collective des palettes, selon le document FR 2890064.

Selon ce même document, il apparaît que chaque paire de modules de levage et de déplacement qui prend en charge chaque palette, est constitué, en fait, de quatre éléments de levage, eux-mêmes équipés d'un mécanisme à mouvement symétrique doté de deux vérins plats gonflables. Par exemple, l'encombrement total apparent de l'ensemble des éléments sous une palette longue de 800 millimètres ferait donc apparaître un total de huit vérins dans quatre mécanismes de levage intégrés à quatre éléments de levage, disposés deux par deux dans les deux modules de levage et de déplacement, présents sous chaque palette du même type d'une rangée, l'ensemble des modules formant deux trains de modules parallèles appelés liens d'entrainement. En cas de changement de format, l'expansion de chaque module de levage et de déplacement pour s'ajuster à un autre format de palette se fait en écartant ou en rapprochant les deux éléments de levage, avec un système à expansion centrale, pour les dits éléments, à double expansion pour les poutres d'extrémité des dits modules porteurs de la palette. Chacun des modules porteurs de palette est relié au suivant par un maillon de liaison lui-même expansible.

De même, à l'intérieur des éléments de levage, on s'aperçoit que le mécanisme reste complexe et encombrant par la présence de deux vérins, commandant un mécanisme central de levage, mécanisme en symétrie afin que le levage reste parallèle. La présence des deux vérins par élément de levage rend difficile la réduction de leur longueur, complique leur intégration dans le module porteur de levage et de déplacement, dont la longueur ne peut être alors aisément réduite pour les palettes les plus courtes ou bien exige une grande expansion entre éléments de levage et poutres d'extrémités des modules porteur de levage et de déplacement, pour les palettes les plus longues.

Pour apporter une solution plus fonctionnelle dans les réglages de format, il serait intéressant que les éléments de levage voient leur taille devenir indépendante de la taille de la palette, donc indépendants d'une intégration dans un module porteur de levage et de déplacement, qu'ils soient reliés entre eux du point de vue énergétique, afin de transmettre aux éléments suivants l'énergie disponible en réseau. Il faudrait qu'ils puissent se grouper facilement en nombre s'il s'agit d'une palette longue avec une charge élevée, indépendamment de la longueur standard ou non de la palette, ou bien au contraire s'espacer au mieux par petits groupes en occupant le moins de place possible en longueur si la palette est courte.

Pour cela, il faut maintenir la plus réduite possible, la taille en longueur du module (3) de levage, à déplacement relatif motorisé par rapport au lien d'entrainement flexible (1), en développant cependant ses capacités de levage en effort et en hauteur. Pour obtenir ce résultat, compte tenu de la compacité nécessaire des modules pour se loger sous les palettes les plus courtes, compte tenu de leur équipement en motorisation pour leur déplacement par rapport au lien d'entrainement flexible (1), il faudrait placer dans chacun des dits modules (3), un mécanisme de levage capable de lever suffisamment les palettes, d'en vaincre la charge, tout en restant compatible avec un encombrement restreint, celui disponible dans le reste du volume du module (3) de levage à déplacement relatif motorisé par rapport au lien d'entrainement flexible (1).

Pour apporter une solution au présent dispositif, l'idéal serait de pouvoir grouper jusqu'à six éléments de levage sous le format de palette le plus long en standard, soit 1200 millimètres et seulement quatre éléments sous la palette de 800 millimètres.

Le dispositif selon l'invention permet de remédier à ces inconvénients qui limitent la possibilité de manutention des palettes, limitent leurs formats, limitent leur espacement.

Selon une quatrième caractéristique, chaque module (3) de levage à déplacement relatif motorisé, constitué d'une poutre supérieure (6) portante et d'une poutre inférieure (28) parallèle formant ensemble une structure expansible verticalement, comprend, d'une part, un moyen de levage motorisé (34,35,33,32,31,30) commandant la sortie inférieure d'un boggie articulé (40), le dit moyen étant équipé d'au moins une genouillère (31, 32), celle-ci étant en appui sur la poutre inférieure (28) pour basculer en sortie ledit boggie (40), par un actionneur (30) également en appui sur la poutre inférieure (28), provoquant par son expansion verticale entre les dites poutres inférieure (28) et supérieure (6), une course dans la genouillère (31, 32), actionnée par un axe de pivot (39), commun à une coulisse (33) glissant dans la poutre supérieure (6), la dite coulisse reprenant la dite course jusqu'à arc-boutement de la genouillère (31,32) pour amplification d'effort et maintien du levage, obtenant ainsi le levage amplifié du module (3) par rapport à la course interne de l'actionneur (30) dans un rapport proche de 2,5.

Selon le détail de cette caractéristique, chaque module (3) de levage, à déplacement relatif motorisé par rapport au lien d'entrainement flexible (1), constitué d'une poutre supérieure (6) horizontale portante et d'une poutre inférieure (28), parallèle et intérieure à la poutre (6), formant ensemble une structure expansible verticalement, comprend, d'une part, un mécanisme de levage composé d'au moins un levier (34), supportant, par le pivot d'un axe (41), un boggie (40) placé au centre dudit module (3), leviers (34) étant guidés par un pivot commun (35) sur la poutre inférieure (28) et une genouillère formée d'au moins une bielle (32) et au moins une bielle (31), actionnant ensemble les leviers (34) en basculement autour du pivot (35), les bielles (31) étant guidées en pivot commun arrière sur la poutre inférieure (28) par ses cotés, et d'autre part, un actionneur à mouvement vertical, formé par exemple d'un bloc d'alimentation (29), fixé sous la poutre supérieure (6), et solidaire d'un vérin (30), lui-même en appui sur la poutre inférieure (28), provoquant une expansion verticale entre les dites poutres inférieure (28) et supérieure (6), de la valeur de la course du vérin (30), course reprise dans la genouillère des bielles (31) et (32), par un axe de pivot (39), commun aux dites bielles, actionné par la coulisse (33) en glissière horizontale dans la poutre supérieure (6), la transformation de mouvement ainsi obtenue commandant avec amplification d'amplitude et, sur la fin de la course, avec amplification d'effort jusqu'à arc-boutement des bielles (31) et (32) de la genouillère, le basculement des leviers (34) commandant la sortie inférieure du boggie (40), provoquant ainsi le levage amplifié du module (3) par rapport à la course interne du vérin (30) dans un rapport proche de 2,5.

La compacité conférée par la concentration des outillages de levage et de déplacement internes au module (3) de levage, à déplacement relatif motorisé par rapport au lien d'entrainement flexible (1), permettra son accueil en groupe sous les palettes de différents formats dans les meilleures conditions. Le choix d'un mécanisme à genouillère arc-bouté en position haute dudit module (3), permet de sécuriser cette position levée, indépendamment de la commande des actionneurs (30). Le choix du mécanisme à double mouvement - expansion inter-poutres (28, 6) provoquant l'expansion de la genouillère (31, 32), faisant basculer autour du pivot (35), les leviers (34) sur lequel le boggie (40) est articulé - permet d'obtenir un rapport de course de l'ordre de 2,5 entre la course de levage du module (3) et la course du actionneur (30), ce qui favorise la compacité et la sécurité d'emploi du dispositif. On peut penser que cela est défavorable au dimensionnement de l'actionneur (30), dont la charge serait alors multipliée par le même coefficient. Mais dans le calcul des efforts réels sur l'actionneur, il faut prendre en compte la géométrie du mécanisme à double détente, car l'effort fourni par l'actionneur (30) en bout de course reste très faible, lorsque la genouillère aligne les bielles (31) et (32). Cet effet connu a été recherché afin de soulager l'actionneur. En course d'approche de la poutre (6) sous la palette à soulever, l'effort à fournir par l'actionneur reste faible, tant que la charge n'est pas soulevée. Pour décoller la palette du sol, l'effort à fournir est important à ce moment, mais la géométrie de la genouillère commence à se trouver en position de soulager l'actionneur (30), au moment où la montée du module (3) lève le dessous de la palette, ce qui diminue d'autant l'effort à fournir de l'actionneur (30), qui ne sera donc pas surdimensionné.

Le montage latéral des mécanismes complémentaires à ciseaux, indépendants du levage, permet de renforcer la compacité, sans compliquer un mécanisme de levage logé au centre dans un espace réduit et qui n'utilise qu'un seul vérin. Ils sont disposés chacun dans l'un des deux intervalles latéraux situés entre les poutres (6) et (28), formés des leviers (37) articulés entre eux par leur milieu, articulés en pivots par une extrémité respectivement sur les poutres (6) et (28), et par l'autre extrémité en pivots et coulisses horizontales (38) par rapport aux mêmes poutres respectivement (28) et (6), complétant ainsi le mécanisme de levage pour garantir l'expansion verticale parallèle des poutres (6) et (28), sans déplacement relatif horizontal des dites poutres. On peut compléter utilement cette implantation en installant dans chaque mécanisme à ciseaux, un ressort de rappel en fermeture des ciseaux, pour aider à la descente à plat du module (3) de levage à déplacement motorisé.

Le positionnement d'une paire de liens d'entrainement flexibles (1) sous une rangée de palettes jusqu'à la première palette de cette rangée, doit pouvoir être assuré par une introduction correcte de ces liens d'entrainement (1) équipés de tous les modules (3) de levage, à déplacement relatif motorisé par rapport aux dits liens (1).

Dans le document FR 2890064, la solution d'introduction consiste à pousser chaque lien flexible par paire, grâce à un tracteur situé à l'arrière du chargement à manipuler. Cette opération suppose que les modules de levage, non motorisés, disposés les uns derrière les autres et espacés des maillons de liaison, pourront franchir sans problème la distance à parcourir sous chaque rangée, assurer notamment le franchissement de traverses éventuelles au sol, selon les dispositions de palettes, avec le risque d'un comportement des modules un peu aléatoire, sans doute difficile à maîtriser, notamment pour ceux situés en tête de lien, modules disposant alors de degrés de liberté en grand nombre, par rapport à l'arrière, eu égard aux articulations successives rencontrées jusqu'à eux.

Dans le présent dispositif, chaque lien d'entrainement flexible (1) pourrait être poussé pour cette introduction, s'il était parfaitement rigide, mais sa rigidité serait alors en contradiction avec la souplesse de comportement recherchée dans le mouvement relatif des palettes dans les opérations de chargement ou déchargement. Pousser uniquement les liens d'entrainement flexibles (1) sous les palettes paraît donc trop aléatoire pour être une solution suffisante.

Pour guider correctement chaque lien d'entrainement flexible (1) à destination de la dernière palette de chaque rangée, il faudrait un moyen qui puisse tracter le lien d'entrainement flexible (1) et les modules (3) de levage, à déplacement relatif motorisé, qu'il supporte, pour les répartir sous chaque palette de la rangée jusqu'à son extrémité sous la première palette, moyen qui soit capable de franchir seul d'éventuelles traverses au sol et de les faire franchir aux dits modules (3) qui le suivent.

Le dispositif selon l'invention permet de remédier à ces inconvénients qui limitent la possibilité d'introduction des liens d'entrainement.

Dans ce but, selon une cinquième caractéristique, chaque module tracteur (2) de levage, à déplacement motorisé au sol, équipant les extrémités des liens d'entrainement flexibles (1), comporte au moins un boggie motorisé (21), articulé horizontalement sur un moyen de levage (34,33,31,32,30) semblable à ceux des modules (3) de levage, à déplacement relatif motorisé, le dit boggie (21) supportant d'une part, un moyen moteur (23, 24, 22, 26, 27) dudit boggie motorisé (21), actionnant d'une part au moins une roulette (22) dudit boggie (21), pour motoriser au sol, le module tracteur (2) en appui sur lesdites roulettes (22), et actionnant éventuellement d'autre part une molette à denture pointue (25), la dite molette (25) s'appuyant sur le dessus des traverses au sol qui se présenteraient à elle pour aider les dites roulettes (22) du boggie (21) du module tracteur (2), au franchissement desdites traverses.

Dans le détail de cette caractéristique, chaque module tracteur (2) de levage, à déplacement motorisé au sol, équipant les extrémités des liens d'entrainement flexibles (1), comporte un boggie motorisé (21), articulé horizontalement sur un mécanisme de levage de même type que ceux des modules (3) de levage, à déplacement relatif motorisé, le dit boggie (21) supportant d'une part, un moteur (23), de type électrique ou de type à fluide à engrenage intérieur ou à palettes, actionnant au moins un rotor à denture extérieure (24), et d'autre part, d'un premier coté, en les guidant en pivots parallèles, deux trains de roulettes (22), chacun des deux trains étant équipé d'au moins un pignon denté (26), concentrique aux roulettes (22), solidaire d'elles en rotation, en diamètre extérieur inférieur à leur diamètre d'appui au sol, les deux trains étant synchronisés en rotation par au moins un pignon intermédiaire (27) s'engrenant dans les pignons (26) des deux trains, guidé lui-même en pivot sur le dit boggie (21), l'un au moins des pignons (26) étant entrainé en rotation par le rotor à denture extérieure (24), pour motoriser au sol, le module tracteur (2) en appui sur les roulettes (22), et d'un second coté, une molette à denture pointue (25), guidée en pivot parallèle aux pivots précédents sur le dit boggie (21), entrainée en rotation par le dit rotor (24), la dite molette (25) s'appuyant sur le dessus des traverses au sol qui se présentent à elle pour aider le module tracteur (2) de levage, à déplacement motorisé au sol par les trains de roulettes (22), au franchissement des dites traverses.

Dans un autre mode de réalisation, pour remplacer l'action du moteur (23) du boggie (21), un entrainement moteur pourrait être placé à l'intérieur de l'une au moins des roulettes (22), ce qui permettrait l'usage direct de moteurs appelés encore moteurs-roues, dont la partie mobile est formée par le rotor-roue à l'extérieur et dont la partie fixe est l'axe à l'intérieur, solidaire du boggie (21).

De tels moteurs-roues s'utilisent dans les vélos électriques, mais également sous une autre forme dans les tambours moteurs pour convoyeurs.

Selon les applications actuelles des dits moteurs-roues, certains contiennent des entrainements avec réduction de vitesse par engrenages, la tendance récente étant à l'entrainement direct d'un rotor extérieur doté d'aimants permanents par un stator fixe équipé de bobinages. C'est à cette dernière technologie que l'on pourrait avoir recours pour l'entrainement des roulettes (22) du boggie (21).

Pour ce module tracteur (2) de levage, à déplacement motorisé au sol, l'entrainement par un seul moteur (23) des roulettes (22) du boggie (21) et de sa molette (25) d'aide au franchissement, doit permettre au lien d'entrainement flexible (1) et aux modules (3) de levage, à déplacement relatif motorisé dont il est équipé, de progresser sous les rangées de palettes, par roulement des roulettes (22) au sol et au besoin, par progression du boggie (21) sur les traverses, grâce à la molette (25) d'aide au franchissement, les pointes de cette molette agrippant la traverse des palettes, pour soulever le boggie (21) et l'aider à franchir la traverse.

On peut également utiliser le moteur (23) du module tracteur (2) de chaque lien d'entrainement flexible (1) pour tracter en avant l'ensemble d'un chargement sur palettes en position levée, en assistance d'un pousseur du dit chargement à l'arrière, notamment si les palettes ne sont pas resserrées pour faciliter leur déplacement et absorber les fluctuations d'orientation de leur plans de charge.

On peut également utiliser le module tracteur (2) de levage, à déplacement motorisé au sol, pour maintenir une tension dans les liens d'entrainement flexibles (1) en lui demandant d'opposer une traction à celle d'un véhicule tracteur situé à l'arrière, tractant les liens d'entrainement flexibles (1). Cela aurait pour but de raidir les liens d'entrainement flexibles (1) afin de positionner plus facilement entre elles, les palettes du chargement, de les espacer ou des les rapprocher grâce aux modules (3) de levage, à déplacement relatif motorisé par rapport aux liens d'entrainement flexibles (1) qui les supportent. Ce travail pourrait être utile à l'intérieur d'un véhicule de transport, pour tasser le chargement.

Les modules tracteurs (2) de levage, à déplacement motorisé au sol, se plaçant en premier sous la première palette, il est possible d'en grouper plusieurs et d'utiliser leurs efforts de traction en commun comme s'ils étaient tous solidaires de la même première palette. La motricité ainsi obtenue par l'ensemble des appuis moteurs au sol en charge de la première palette, permettra de tracter l'ensemble d'un chargement par les roulettes motrices (22) de tous les modules tracteurs (2) de levage utilisés, les autres modules (3) de levage, à déplacement relatif motorisé par rapport aux liens d'entrainement flexibles (1), roulant sur leurs roues (36) pour porter les charges de leurs palettes respectives.

Dans une forme différente de réalisation des modules (3) de levage à déplacement relatif motorisé par rapport au lien, l'introduction d'une motorisation comparable à celle des modules tracteurs (2) de levage, à déplacement motorisé par rapport au sol, est souhaitable pour que toutes ces motorisations de roulettes (22) des différents boggies alors motorisés, collaborent ensemble à la progression du chargement soulevé par lesdits modules de levage.

Le franchissement par les palettes, d'une rampe d'accès à un véhicule de transport, faible de pente, est sans doute envisageable par la traction simultanée des roulettes motrices (22) de tous les modules tracteurs (2) sous cette première palette et de la poussée d'un véhicule tracteur sur l'arrière du chargement.

A fortiori, si tous les modules de levage, tracteurs (2) de levage, à déplacement motorisé par rapport au sol et les modules (3) de levage à déplacement relatif motorisé sont équipés d'une motorisation des roulettes (22), le franchissement autonome de petits obstacles par chacun desdits modules sera plus facile.

Après manipulation de la rangée, dans l'opération de retrait des liens d'entrainement flexibles (1), par l'arrière du chargement, le moteur (23), équipant le boggie (21) du module tracteur (2) sera mis en roue libre, pour libérer les roulettes (22) d'un couple moteur.

Selon le document FR 2890064, lors de la traction sur les liens d'entrainement supportant les palettes par leur module de levage, on sollicite en traction l'ensemble des composants, notamment les modules de levage et de déplacement, les maillons d'expansion situés entre eux, toutes les articulations des attelages ainsi constitués. Ce qui devrait être évité s'il l'on veut maintenir une bonne fiabilité de la solution.

Dans le présent dispositif, toute traction sur les liens d'entrainement flexibles peut solliciter les liaisons entre chaque module (3) de levage, à déplacement relatif motorisé et le lien d'entrainement flexible (1) qui le traverse. Les liaisons sont formées des dentures des rotors (5) et dents du lien d'entrainement (1) à leur contact. Tout effort sur le dit lien d'entrainement (1) fera tourner le dit rotor (5), sauf à bloquer ce mouvement de rotation dans le moteur (4).

Pour éviter tout déplacement relatif d'un module (3) de levage, à déplacement relatif motorisé par rapport au lien d'entrainement flexible (1) qui le traverse, soit dans le cas de l'usage d'un moteur (4) de type électrique, à transmission irréversible ou disposant d'un frein, ou dans le cas de l'usage d'un moteur (4) de type à fluide, immobilisé alors par le blocage des voies (9) et (10), on peut immobiliser le rotor (5) par rapport au stator (7) du moteur (4), solidaire de la poutre supérieure (6) du module (3) de levage à déplacement relatif motorisé, empêchant alors tout déplacement relatif dudit module (3) par rapport au lien d'entrainement flexible (1) qui le traverse. Ce mode de blocage sollicite des pièces mécaniques délicates, appartenant à des moteurs dont ce n'est pas la véritable fonction.

Il faudrait donc trouver un autre mode de freinage indépendant des moteurs (4), ce qui éviterait la sollicitation inutile des éléments du moteur.

Le dispositif selon l'invention permet de remédier à ces inconvénients qui pourraient limiter les possibilités offertes en manutention par les caractéristiques précédentes.

Selon une sixième caractéristique, chaque module (3) de levage, à déplacement relatif motorisé par rapport au lien d'entrainement flexible (1), contient un moyen de freinage (50) guidé dans le module (3) perpendiculairement au dit lien (1) et dont la commande en translation freine ou stoppe le déplacement relatif du module (3) par rapport au dit lien (1) qui le traverse, lui-même en appui guidé par rapport module (3), solidarisant ledit lien (1) avec le module (3) ou à l'inverse, autorisant son déplacement relatif par rapport au dit module (3), selon la position commandée du dit moyen de freinage (50).

Dans le détail de cette dernière caractéristique, chaque module (3) de levage, à déplacement relatif motorisé par rapport au lien d'entrainement flexible (1), contient une plaque frein comportant éventuellement des dentures (50) implantée sur le trajet du dit lien (1) guidé notamment dans la zone de passage (43) du bloc d'alimentation (29), la dite plaque frein avec dentures (50) étant guidée verticalement en glissière dans le dit bloc (29), solidaire de la poutre (6) et dont la commande en translation verticale stoppe le déplacement relatif du module (3) de levage par rapport, au lien d'entrainement flexible (1), par engagement de ses dentures dans celles du lien d'entrainement (1), lui-même alors en appui sur la poutre (6) qui le guide, solidarisant ainsi le lien d'entrainement flexible (1) avec le module (3) dont le frein denté (50) est activé, ou à l'inverse, désolidarisant le dit module (3) du dit lien (1), quand la plaque frein à dentures (50) est descendue dans son logement du bloc (29), laissant circuler librement le lien d'entrainement flexible (1), dans sa zone de passage (43).

Le bloc (29) dispose d'un volume suffisant pour y implanter cette fonction technique de freinage. De plus, ce bloc reçoit déjà l'énergie fluide nécessaire au levage du module (3), par l'actionneur (30), dont il assure la distribution. On peut donc y intégrer un vérin interne vertical, à rappel par ressort ou par fluide, dont la tige motrice est la plaque frein à dentures (50). Cette solution apporte une simplification avantageuse des moteurs (4), devenant uniquement utiles aux déplacements des modules (3) de levage, à déplacement relatif motorisé.

Afin de permettre l'alimentation en énergie fluide des différents modules (3) de levage à déplacement motorisé, jusqu'au module terminal (2) de levage à déplacement motorisé au sol, l'ensemble des dits modules (3) doivent être équipés de moyens susceptibles de permettre leur alimentation indépendamment de la distance minimum et maximum qui les sépare, moyens devant être compatibles avec l'usage et l'encombrement disponible pour le passage des liens d'entrainement flexibles (1) équipés, sous les rangées de palettes, notamment dans les déplacements relatifs en inclinaisons ou en hauteur des dits modules (3) sous les palettes.

Cela semble également nécessaire dans la solution présentée au document FR2890064, mais le document ne détaille pas de solution constructive.

Dans ce but, selon une septième caractéristique, chaque lien d'entrainement flexible (1) comporte, en plus des modules tracteurs (2) de levage, à déplacement motorisé au sol et des modules (3) de levage, à déplacement relatif motorisé, au moins un moyen d'alimentation (11,13,14), formant un ensemble librement pliable ou dépliable, longitudinalement fixé par un moyen de couplage (19,20) entre les modules (3) de levage, à déplacement relatif motorisé, permettant le couplage énergétique et informatique des dits modules (3) de levage entre eux, dans leur répartition le long des liens d'entrainement flexibles (1), les dits moyens d'alimentation (11,13,14) et de couplage (19,20), permettant par leur encombrement variable de couvrir les distances variables entre lesdits modules.

Dans le détail de cette caractéristique, chaque lien d'entrainement flexible (1) comporte, en plus des modules tracteurs (2) de levage, à déplacement motorisé au sol et des modules (3) de levage, à déplacement relatif motorisé, au moins un mécanisme d'alimentation (11), formé d'au moins deux bras latéraux (13), et d'au moins un bras central (14), au travers desquels passe, par deux voies distinctes, un fluide sous pression, les dits bras étant articulés entre eux par des articulations formées des boulons creux (17) et des vis creuses (18), les dits bras et articulations formant un ensemble librement pliable ou dépliable longitudinalement entre les coupleurs (19) et (20), les dits coupleurs étant rigidement verrouillés sur les modules (3) de levage, à déplacement relatif motorisé, permettant le couplage énergétique et informatique des dits modules (3) de levage entre eux, dans leur répartition le long des liens d'entrainement flexibles (1), les dits mécanismes (11) permettant par leur encombrement variable de couvrir les distances variables existantes entre les dits modules.

Pour conduire les fluides, une autre solution existe sur le marché des composants, qui consiste en une liaison flexible réalisée par un tube à spires hélicoïdales cylindrique, au bout duquel, à ses extrémités, on a placé des raccords de connexion. Dans l'usage d'une telle solution, on peut craindre quand la distance entre modules (3) de levage à déplacement motorisé s'agrandit, que les spires ne s'allongent en traînant au sol. A l'inverse, au moment d'un rapprochement des modules (3) de levage à déplacement motorisé, les spires restant un peu trop relâchées peuvent se bloquer sous les dits modules (3) ou même se prendre dans des obstacles imprévus du trajet des palettes. Il faudrait donc une liaison de couplage énergétique, selon la précédente caractéristique, qui reste en hauteur et dans des proportions d'encombrement déplié ou replié satisfaisantes pour l'usage, en restant compatible avec les comportements de découplage nécessaires entre modules (3) de levage à déplacement motorisé.

Le dispositif selon l'invention permet de remédier à ces inconvénients qui pourraient limiter les possibilités d'utilisation définies par les caractéristiques précédentes.

Selon une huitième caractéristique, chaque moyen d'alimentation (11,13,14) comporte, en outre, au moins un guide-support (15,16) dans lequel passe librement le lien d'entrainement flexible (1), celui-ci limitant ainsi, par sa tension, les déplacements verticaux du moyen d'alimentation (11,13,14), sur la distance séparant les modules (3) de levage, à déplacement motorisé.

Selon cette dernière caractéristique, chaque mécanisme d'alimentation (11) formé des bras latéraux (13), et de bras centraux (14), articulés entre eux par des boulons creux (17) et des vis creuses (18), comporte en outre au moins un support-guide formé d'un portique, articulé sur l'une des articulations hautes formées par les boulons (17), ledit portique guidant deux rouleaux distincts, l'un supérieur (15) et l'autre inférieur (16) entre lesquels passe librement le lien d'entrainement flexible (1), celui-ci limitant ainsi les déplacements verticaux des bras (13) et (14) du dit mécanisme, sur la distance séparant les modules (3) de levage, à déplacement motorisé.

Selon un autre de mode de réalisation, lié à la répartition des modules (3) de levage, à déplacement motorisé, il est nécessaire, pour des distances de séparation importantes des dits modules (3), de recourir à un version du mécanisme d'alimentation (12) d'allongement plus long. Ce mécanisme d'alimentation (12) ne se distingue du mécanisme d'alimentation (11) que par le nombre de plis possible, car sa constitution est totalement identique. Ce mécanisme (12) est particulièrement utile dans le groupement en série d'une répétition de deux modules (3) groupés par un mécanisme (11), suivi d'un mécanisme (12). Une telle disposition permet de prendre à la fois les palettes courtes, par deux modules (3) placés en longueur et les palettes longues par trois modules (3) consécutifs. Dans le cas des palettes longues à traverses, deux modules (3) seulement sont possibles, à cause des traverses. Il faut alors un mécanisme (12) pour rejoindre le groupe de deux modules (3) sous la palette suivante.

Ces mécanismes d'alimentation (11) et (12) permettent d'apporter l'énergie nécessaire et commune à tous les modules (3) de levage, à déplacement relatif motorisé. Le pliage ou le dépliage de chaque mécanisme d'alimentation (11) ou (12), la rotation de leurs articulations, dépendra de la position relative de chaque module (3) de levage, à déplacement relatif motorisé, par rapport à ses voisins. Le lien d'entrainement flexible (1) étant logiquement tendu entre les modules (2) de levage, à déplacement relatif motorisé, l'usage des portiques à rouleaux (15) et (16) pour contrôler la déformation des plis, leur orientation, permettra d'améliorer le comportement de cette liaison énergétique à géométrie variable, sans gêner le déplacement du lien d'entrainement (1) par rapport au dit mécanisme ou aux modules (3) adjacents.

Dans l'usage du dispositif, une liaison énergétique pour commander le fonctionnement d'un moteur à fluide (4) ou d'un bloc d'alimentation (29) doit s'accompagner de commandes par électrovannes (45), telles que celles implantées sur les outillages, d'une part et d'autre part, de contrôles électriques, tels que ceux des capteurs équipant le module tracteur (2) de levage, à déplacement motorisé au sol, donnant la progression du dit module (2) sous la rangée de palettes. Le dispositif s'accompagne également d'une partie commande qui demande le plus souvent l'implantation de capteurs de contrôle de position ou d'état des actionneurs. Or si la liaison énergétique est satisfaite par les caractéristiques précédentes du mécanisme d'alimentation, il faudrait qu'il permette également le passage d'une liaison électrique qui satisfasse les liaisons informatiques et automatiques de la partie commande. Dans le cas d'une motorisation électrique des modules tracteur (2) de levage, à déplacement motorisé au sol, ou des modules (3) de levage à déplacement relatif motorisé, cette liaison entre modules est indispensable. Un câblage est donc nécessaire, circulant entre les modules (3) de levage, à déplacement relatif motorisé, jusqu'aux derniers modules tracteurs (2) de levage, à déplacement motorisé au sol. Il faut que ce câblage puisse s'adapter aux variations de distance entre modules (3) et qu'il soit protégé des obstacles extérieurs.

Le dispositif selon l'invention apporte une solution à ce problème.

Selon une neuvième caractéristique, chaque moyen d'alimentation (11,13,14) et chaque moyen de couplage (19,20) comporte des orifices oblongs centraux (47,48,49) pour assurer et protéger le passage d'une nappe de fils électriques (46) et de ses connecteurs aux modules (3) de levage, à déplacement relatif motorisé, aux modules tracteur (2) de levage, à déplacement motorisé au sol, ladite nappe de fils (46) étant destinée à la commande des dits modules, au contrôle de leur fonctionnement, à l'alimentation et au retour des informations des capteurs disséminés dans les dits modules répartis le long des liens d'entrainement (1).

Dans le détail de cette caractéristique, chaque mécanisme d'alimentation en fluides (11) comporte des orifices oblongs centraux (47), (48) pratiqués respectivement dans les coupleurs (19) et (20) des dits mécanismes d'alimentation (11), et un orifice oblong central (49) dans leurs bras centraux (14), pour assurer et protéger le passage d'une nappe de fils électriques (46) et de ses connecteurs aux outillages des modules (3) de levage, à déplacement relatif motorisé, des outillages des modules tracteur (2) de levage, à déplacement motorisé au sol, nappe de fils (46) destinée à la commande des dits outillages des dits modules, au contrôle de leurs fonctionnements, à l'alimentation et au retour des informations des capteurs disposés dans les dits modules tracteurs (2) ou dans les dits modules (3) disséminés le long des liens d'entrainement (1), la forme et l'emplacement des orifices (47), (48), (49) permettant le passage libre des connecteurs, le pliage et le dépliage régulier et ordonné de la nappe, sa protection vis à vis de l'extérieur des mécanismes (11).

La compacité de l'assemblage des modules (3) de levage à déplacement motorisé, pour leur intégration sous les palettes les plus courtes est encore renforcée par les liaisons énergétiques et informatiques pliables entre modules (3), obtenues par l'installation des mécanismes d'alimentation (11) ou (12) reliant les coupleurs (19) et (20) aux outillages intégrés, moteurs de déplacement électriques ou à fluides (4), moteurs (23), blocs d'alimentation (29) et leurs actionneurs (30), les dits mécanismes d'alimentation (11) ou (12) se repliant au maximum dans une compacité extrême en pliant et protégeant la nappe de fils reliant les capteurs et les actionneurs à la partie commande.

De cette manière, la construction et l'entretien du dispositif de manutention collective à déplacement motorisé sera facilité par ces mécanismes d'alimentation (11) et (12) dont le couplage aux modules (3) ou leur découplage sera amélioré par un verrouillage rapide et rigide des coupleurs (19) et (20).

Le dispositif de manutention motorisé serait complet si chacune des palettes soulevées pouvait se déplacer au sol, indépendamment des voisines, notamment pour éviter un poussage par un véhicule tracteur à l'arrière du chargement. Or, si les modules tracteurs (2) de levage peuvent assurer cette fonction de déplacement des palettes roulant sur le sol sur les roulettes (22) des boggies (21) de chacun de ces modules, les modules (3) de levage, à déplacement relatif motorisé, ne se déplaçant au sol que par déplacement relatif par rapport au lien d'entrainement flexible (1), déplacement pratique pour le positionnement relatif des palettes entre elles, mais non moteur pour leur chargement dans un véhicule de transport. Il faudrait donc que la solution de motorisation des boggies présentée pour les modules tracteurs (2) soit reproduite pour les modules (3) de levage, à déplacement relatif motorisé, ceux-ci devenant alors une autre forme de réalisation des dits modules (2).

Le dispositif selon l'invention remédie à cet inconvénient susceptible de limiter l'intérêt des autres caractéristiques déjà apportées.

Selon une dixième caractéristique, dans un mode particulier de réalisation dit de motorisation mixte, le module tracteur (2) de levage, à déplacement motorisé par rapport au sol, comporte un moteur basculant (60) articulé par un axe (62) sur le boggie (21), le dit moteur basculant (60) étant équipé d'une part, d'un rotor (59) qu'il anime en rotation, et d'autre part, d'une commande de position (63), ledit moteur (60) pouvant occuper par ladite commande de position (63), deux positions stables et distinctes d'entrainement, une première position permettant le déplacement relatif du module (2) de levage par rapport au lien d'entrainement flexible (1), quand le rotor (59) est engrené dans la denture dudit lien (1), une seconde position permettant le déplacement du module (2) de levage par rapport au sol, quand le rotor (59) entraine les roulettes (22) du boggie (21) porteur du module (2), le changement du type de déplacement étant commandé à distance.

Dans le détail de cette caractéristique, le module tracteur (2) de levage, à déplacement motorisé par rapport au sol, réalisé dans ce mode particulier de réalisation dit de motorisation mixte, comporte un moteur basculant (60) articulé par un axe (62) sur le boggie (21), le dit moteur basculant (60) étant équipé d'une part, d'un rotor (59) qu'il anime en rotation, et d'autre part, d'un actionneur (63) commandant la rotation d'un excentrique de basculement (64), actionnant une bielle de basculement (61), elle-même en liaison pivot avec l'axe des roulettes (22) du boggie (21), le dit moteur (60) pouvant occuper par la commande de l'actionneur (63), deux positions distinctes d'entrainement, une première position permettant le déplacement relatif du module (2) de levage par rapport au lien d'entrainement flexible (1), quand le rotor (59) est engrené dans la denture du lien d'entrainement flexible (1), une seconde position permettant le déplacement du module (2) de levage par rapport au sol, quand le rotor (59) entraine par des pignons dentés (26) et (27), les deux trains de roulettes (22) équipant le boggie (21) porteur du module (2), le changement du type de déplacement étant obtenu par basculement de l'excentrique (64) dans les deux positions différentes stables, commandées à distance.

L'actionneur (63) peut être choisi parmi les micro-vérins à vis sans fin, actionnant des dentures taillés sur l'axe de l'excentrique (64). L'intérêt d'une transmission à roue et vis sans fin, dans le contact de l'actionneur (63) avec l'excentrique (64) est que la position occupée par le dit excentrique est stable par irréversibilité de la transmission.

Dans un autre mode de réalisation visant à simplifier et à réduire le nombre d'actionneurs et de commande d'actionneurs dans les modules tracteurs (2) ou les modules à déplacement relatifs motorisés (3), ou même visant à uniformiser le type de modules utilisés dans la réalisation d'un lien flexible (1) équipé de modules de levage, on pourrait utiliser des entrainements électriques intégrés aux roulettes (22) pour déplacer au sol les modules (3) à déplacement relatif motorisé par rapport au lien flexible (1), le dit lien (1) étant soit solidaire desdits modules (3) grâce aux plaques frein (50), ou étant libéré desdites plaques frein (50) selon le choix individuel ou collectif des modules concernés.

Selon une onzième caractéristique, dans un mode particulier de réalisation, chaque boggie (21) porteur des modules tracteurs (2) de levage, à déplacement motorisé au sol, ou chaque boggie (40) porteur des modules (3) à déplacement relatif par rapport au lien flexible (1), comprend au moins un moyen moteur intégré à l'intérieur d'au moins une roulette (22) desdits boggies, pour entrainer les dits modules (2) ou (3) par rapport au sol, pour déplacer selon les besoins, collectivement ou indépendamment les uns des autres, les différents modules installés sur le lien flexible d'entrainement (1).

### DESSINS

Planche 1/6 :

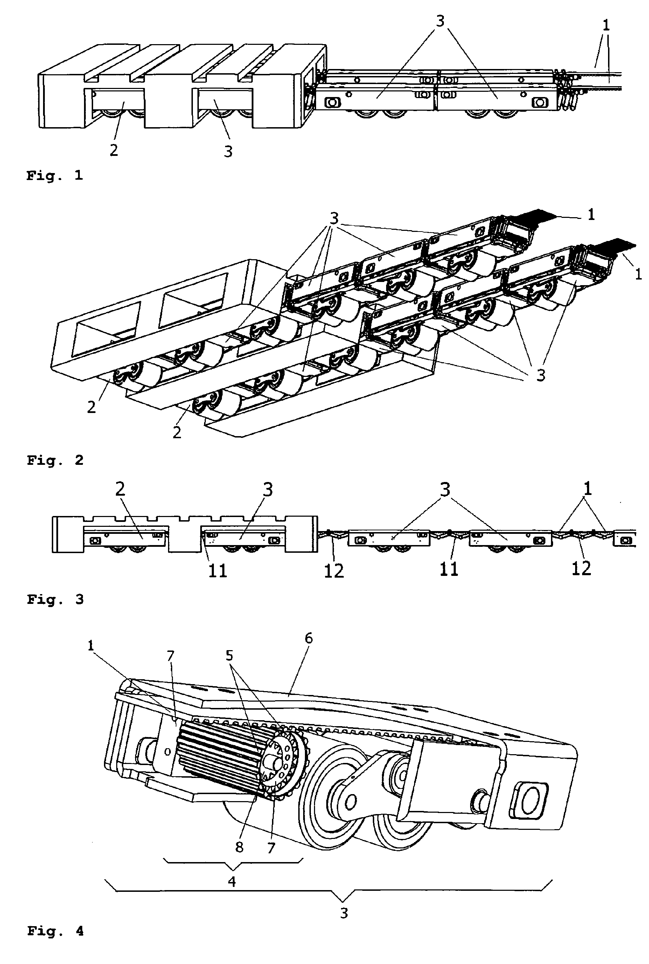

Fig.1 : la figure montre deux liens d'entrainement flexibles (1) équipés de modules tracteurs (2) de levage à déplacement motorisé au sol et de modules (3) de levage, à déplacement relatif motorisé par rapport aux liens d'entrainement flexibles (1), introduits dans une palette de format court de 800 millimètres avec traverses. Les modules (3) sont en position dite de passage de traverses, c'est à dire qu'ils ne sont pas dans la position la plus basse, celle qu'ils pourraient occuper s'il n'y avait pas de traverses à franchir.
Fig. 2 : Dans la phase suivant l'introduction des liens d'entrainement (1) équipés des modules de type (2) ou (3), les modules de levage placés sous une palette longue de 1200 millimètres, sans traverses, sont mis en position haute. La palette est levée simultanément par tous les modules de levage. On y voit l'intérêt de modules de type (2) et (3) très courts en longueur, car on a pu placer six modules de levage, soit de type (2) par rapport au sol, soit de type (3) à déplacement motorisé par rapport au lien d'entrainement flexible (1), ce qui augmente la capacité de levage du dispositif. Si on groupe sous la première palette, au moins quatre modules tracteurs (2) à déplacement motorisé par rapport au sol, on augmente la motricité de l'ensemble, en utilisant le poids de la palette pour générer des forces motrices horizontales au niveau de leurs roulettes motrices.
Fig. 3 : dans ce cas de figure, à cause des traverses présentes dans la longueur de la palette, les modules (2) ou (3) présents pour le levage ne sont au nombre que quatre, sur deux liens d'entrainement (1). Cependant, grâce aux mécanismes d'alimentation (11) et (12) expansibles, installés entre les modules, il n'a pas été difficile de régler leur espacement sur le lien d'entrainement (1), pour les installer au meilleur endroit pour le levage des palettes sans gêne des traverses au sol.
Fig.4 : cette figure montre comment le moteur (4), moteur électrique ou à fluide, commande le déplacement relatif du module (3) de levage, à déplacement relatif motorisé par rapport au lien d'entrainement flexible (1). Le rotor à denture extérieure (5) s'engrène dans le lien d'entrainement flexible (1), ici une courroie crantée de grande largeur, provoquant la translation relative du module (3) par rapport au lien d'entrainement flexible (1). Dans le cas d'un moteur fonctionnant avec un fluide, le moteur (4) est du type à engrenage intérieur. Son stator (7) est solidaire de la poutre (6). Le pignon (8) interne, tourne avec le rotor (5) sur le croissant du stator (7), en formant un engrenage à denture intérieure.

Planche 2/6 :

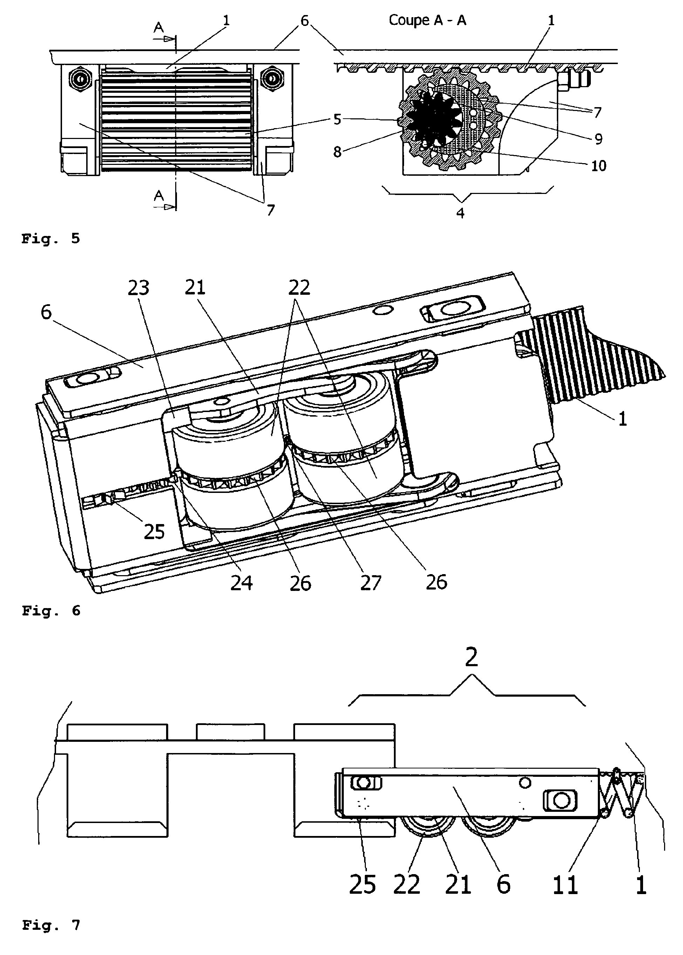

Fig. 5 : cette figure montre en deux vues, dont la coupe A-A, la constitution du moteur (4), dans le cas d'un moteur à fluide. Le fonctionnement en rotation de ce moteur à engrenage à denture intérieure est obtenu par la différence de pression entre les orifices des voies (9) et (10), alimentant les cavités de part et d'autre du stator (7). Les cavités alimentées font tourner les roues dentées (5) et (8), le débit fluide ayant lieu par les circonférences des dites roues. Ces roues dentées (5) et (8) forment également une zone d'étanchéité dynamique dans la zone d'engrènement, contraignant le débit à prendre le chemin des circonférences en faisant tourner les roues dentées.
Fig. 6 : cette figure montre un module tracteur (2) de levage, à déplacement motorisé au sol, placé à l'extrémité de la courroie crantée, formant le lien d'entrainement flexible (1). On y voit que le boggie (21) équipé de deux trains de roulettes (22) est animé en rotation de manière synchrone par le pignon denté (24), mû par un moteur (23) solidaire du boggie (21), pignon s'engrenant dans un premier pignon denté (26) solidaire d'un train de roulettes (22), cette rotation étant reprise pour le train suivant équipé des mêmes roulettes (22) et d'un autre pignon (26), par un pignon intermédiaire de renvoi (27), situé plus haut dans le boggie (21). Une molette à picots (25) elle-même entraînée par le même pignon moteur (24) vient compléter la motorisation, permettant à la fois le roulement motorisé sur le sol du module (2), et en plus, grâce à la molette (25), le franchissement des traverses des palettes posées au sol.
Fig. 7 : cette figure montre justement le module (2) en position de franchissement d'une traverse. En position de levage dite de passage de traverses, la molette à picots (25) vient agripper la planche de traverse de la palette, permet d'aider le boggie motorisé (21) et donc le module (2) qui le porte, au franchissement de la dite traverse, d'autant que la molette à picots (25), les roues dentées (26) et les roulettes (22) tournent dans un sens commun.

Planche 3/6 :

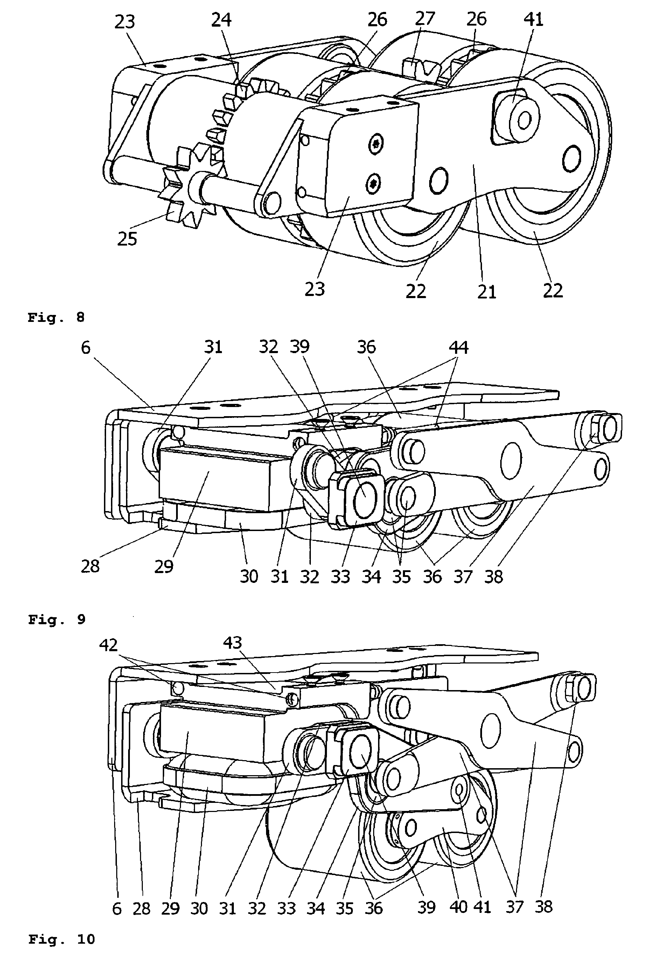

Fig. 8 : cette figure montre le boggie (21) au complet, équipé du moteur (23) qui actionne le pignon moteur (24). Celui-ci, engrené dans la molette (25) d'un coté, engrené dans le pignon (26) du premier train de roulettes (22) de l'autre coté, entraine ces deux roues dentées dans le même sens. Le pignon (27) reprend alors le mouvement du premier train de roulettes (22) et de son pignon (26) pour entrainer le second train de roulettes (22) dans le même sens que le premier, à la même vitesse. Ce boggie (21), ainsi équipé, est articulé sur le mécanisme de levage commun à tous les modules de levage, par l'axe (41) de ces mécanismes.
Fig. 9 : cette figure montre en position basse, un module (3) de levage, à déplacement relatif motorisé, ouvert par découpe pour représentation partielle des poutres (6) et (28), afin de voir l'intérieur du système. On y voit au premier plan, le bloc d'alimentation (29) du actionneur (30), cet actionneur (30) disposé juste au dessous, en appui sur la poutre inférieure (28), le bloc (29) étant, lui, en appui sous la poutre supérieure (6), pour une expansion verticale. La coulisse (33) en pivot (39) dans une glissière horizontale non représentée de la poutre (6) est commandée en montée par celle de la poutre (6). Cette montée provoque la rotation de la bielle arrière (31), en pivot arrière sur un axe solidaire de la poutre inférieure (28) - pivot non représenté -, ce qui provoque l'allongement de la genouillère formée par la bielle (31) et la bielle (32), jusqu'à une position d'alignement des bielles, allongement basculant à son tour le levier (34) autour du pivot (35) fixé sur la poutre inférieure (28), basculement sortant le boggie (40) sous le module (3), provoquant la montée complète dudit module (3) pour le levage des palettes. Un mécanisme latéral à ciseaux, composés des leviers (37) et des coulisses (38) permet une montée en conservant parallèles les poutres (28) et (6). L'usage d'un tel mécanisme reste classique, mais ici, il est logé entre les poutres (28) et (6) dans les intervalles latéraux, ce qui le rend particulièrement intéressant en complément du levage dont il reste indépendant. La liaison énergétique avec les outillages suivants est assurée par des tuyaux de liaison (44), de part et d'autre du volume occupé par le boggie des roues (36), pour que l'ensemble des modules communiquent avec le réseau d'alimentation, soit en air comprimé et en vide, soit en fluide hydraulique.
Fig. 10 : la position haute est atteinte pour le module (3), dans cette figure. On y voit les bielles (31) et (32) alignées dans la position d'arc-boutement, ce qui empêcherait la descente du module en cas de charge supplémentaire et permet un verrouillage en position haute, lors des manutentions des palettes en déplacement. Pour redescendre la charge, on peut compter sur le dégonflage de l'actionneur (30), éventuellement par aspiration pour quitter cette position d'arc-boutement. On peut aider au retour de la position basse en installant dans les leviers (37) des mécanismes à ciseaux, un ressort de rappel. La gravité peut également aider au retour, une fois l'alignement des bielles (31) et (32) rompu. Le mécanisme latéral à ciseaux, composés des leviers (37) et des coulisses (38) est ici en position ouverte, indiquant que les ciseaux ont fonctionnés en ouverture, en suivant le déplacement relatif en expansion des poutres (6) et (28). L'axe (41) de pivotement du boggie (40) par rapport aux leviers (34) est visible dans cette figure. Les orifices (42) de couplage énergétique avec les coupleurs (19) ou (20) des mécanismes d'alimentation (11) ou (12) sont visibles sur le bloc d'alimentation (29). Sur le même bloc (29), on a ménagé un passage libre (43) pour le lien d'entrainement (1) qui doit traverser librement le module, en s'engrenant au passage avec moteur (4) non représenté sur cette vue, pour ne pas en alourdir la représentation.

Planche 4/6 :

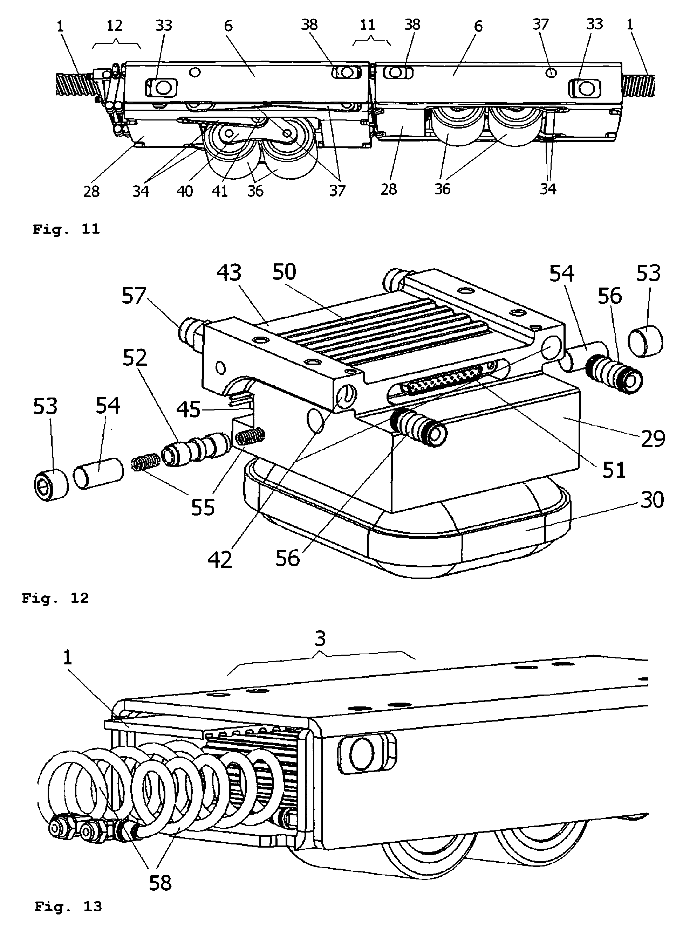

Fig. 11 : cette figure permet de comparer deux modules (3) de levage à déplacement relatif motorisé, installés cote à cote, séparés par un unique mécanisme d'alimentation (11) refermé, les dits modules (3) étant représentés dans deux états différents de hauteur, même si cette occurrence de position n'est pas vraisemblable, car deux modules (3) sont resserrés de cette façon pour être placés ensemble sous une même palette. On y voit le développement important de la sortie de boggie (40) et de l'expansion simultanée des poutres (6) et (28). Les mécanismes à ciseaux, dans les intervalles latéraux complètent la figure. Ils deviennent invisibles en position basse du module (3). Les glissières horizontales des coulisses (33) avec les poutres (6), glissières qui commandent la transformation de l'expansion de l'actionneur (30) en basculement de sortie du boggie (40) sont visibles sur les faces latérales de chaque module (3).
Fig. 12 : Cette figure représente un ensemble formé de l'actionneur (30) et de son bloc d'alimentation (29), montré en position haute, actionneur (30) gonflé. On y a détaillé une partie des composants pour expliquer le fonctionnement de ce système compact. Un distributeur à fluide est intégré au bloc (29). Le bloc reçoit les fluides par les voies (42), voies reliées aux embouts (56) et (57) du système d'alimentation. Le distributeur est formé d'un orifice traversant le bloc (29), présentant plusieurs chambres qui sont mises en relation avec les voies fluides par les positions prises par le tiroir (52), monté à l'intérieur. L'une de ces chambres alimente l'actionneur (30) en pression, quand cette chambre est reliée à la voie (42) en pression. Cette même chambre dégonfle l'actionneur (30) quand elle est mise en relation avec l'autre voie (42) en dépression, pour un fonctionnement à parti d'air comprimé et de vide. Les positions du tiroir sont pilotées par les électrovannes (45) qui alimentent les extrémités de l'orifice contenant le tiroir, mettant on non les dites chambres en relation. Une position neutre est obtenue par les ressorts (55) réglés par les entretoises (54), mis en place dans l'orifice du bloc (29) obturé par les deux bouchons (53). Le bloc d'alimentation (29) recevant l'énergie par les voies (42) et les commandes électriques par le connecteur (51), peut contenir l'électronique de commande, mais également le frein de courroie (50), installé dans la zone de guidage (43) de la courroie crantée, faisant le lien d'entrainement flexible (1) . Ce frein (50) qui peut monter sous l'effet d'une pression et être rappelé en position basse par un ressort ou par le vide, peut en s'engrenant dans la courroie crantée (1), bloquer celle-ci dans le passage (43), empêchant toute translation relative dudit module (3) par rapport au lien d'entrainement flexible (1). Ce frein peut également équiper le système de levage du module tracteur (2), à déplacement motorisé au sol. Son utilisation peut soulager utilement le moteur (4) et remplacer son éventuel frein.
Fig. 13 : cette figure montre une possibilité d'alimentation entre les modules (3) de levage, à déplacement relatif motorisé, par des tubes flexibles (58) enroulés en spires hélicoïdales et reliés par des embouts standard aux outillages des modules. Lors de l'écartement ou du rapprochement des dits modules (3), les spires s'allongent ou se rétractent. Cette solution, évoquée comme une possibilité, pose des problèmes de tenue mécanique lorsque la longueur des enroulements tubulaires devient importante. Bien que la traction sur les liens d'entrainement flexibles (1) portant les palettes ne s'exerce pas sur ces liaisons énergétiques, elles n'ont pas de tenue mécanique suffisante pour résister durablement à des tractions répétées et risquent de traîner au sol, ou bien d'être tendues, sollicitant alors exagérément leur liaison avec le raccord aux outillages.

Planche 5/6 :

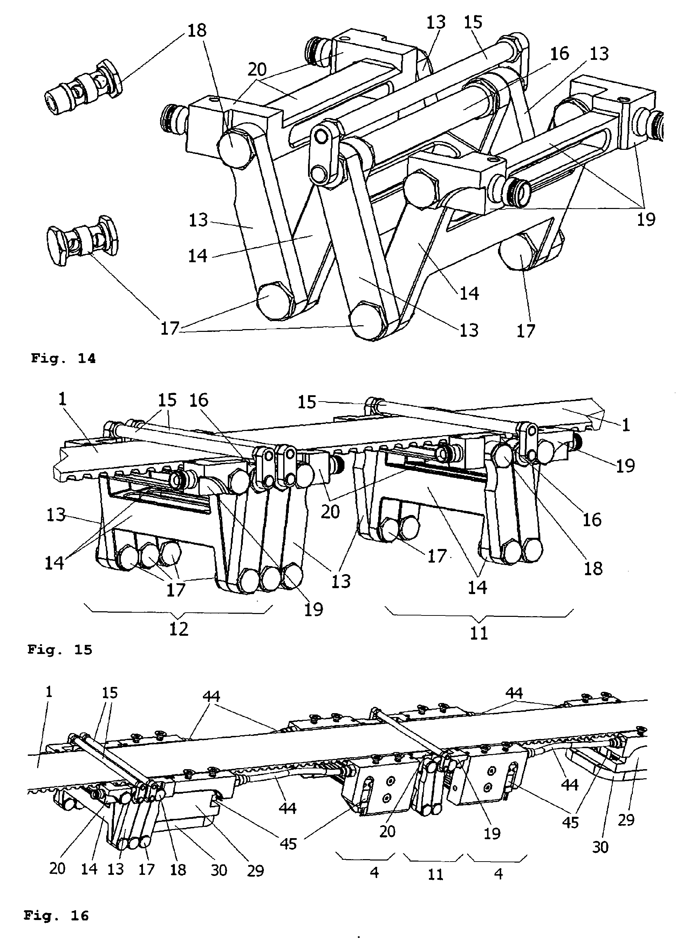

Fig. 14 : Pour proposer une solution plus conforme aux besoins de liaisons énergétiques entre modules (3) de levage à déplacement motorisé, la figure montre le détail de constitution d'un mécanisme d'alimentation (11), système à barres multiples (13) latérales et (14) centrales, creusées, puis bouchées à leurs extrémités puis articulées par les boulons creux d'articulation (17) et les vis creuses (18), également creusés pour le passage des fluides. Deux voies distinctes pour fluide sont ainsi réalisées par le trajet des fluides dans les conduits internes aux bras latéraux (13) et centraux (14), via les articulations (17) et (18). Deux coupleurs rigides (19) et (20) aux extrémités du mécanisme permettent l'accouplement énergétique du mécanisme d'alimentation (11) avec les modules (3) de levage, à déplacement motorisé, sur lesquels ils sont verrouillés. Les orifices latéraux visibles sur les coupleurs (19) et (20) sont les entrées et sorties des voies pour fluide. Le mécanisme d'alimentation ainsi conçu peut plier ou se déplier de manière ordonnée, selon les besoins de distance entre les modules (3) de levage, à déplacement motorisé, les articulations étant conçues pour cette fonction

On y distingue aussi des accessoires de guidage, limitant les degrés de liberté articulaires des bras (13) ou (14), accessoires formés de portiques en pivot sur des articulations (13) dans le haut des barres, portiques guidant en rotation des rouleaux (15) et (16) entre lesquels passent librement le lien d'entrainement flexible (1). De cette manière, les barres (13) et (14) du mécanisme d'alimentation sont contraintes de suivre les mouvements verticaux ou les déformations du lien d'entrainement flexible (1), notamment au passage des rampes d'accès ou lorsque deux palettes voisines, espacées suffisamment, se sont pas levées exactement en même temps. Le passage dudit lien (1) dans les coupleurs (19) et (20) est bien visible dans les encoches faites dans leur milieu.

Fig. 15 : cette figure montre, en position repliée, les mécanismes d'alimentation (11) en modèle court, (12) en modèle plus long, qui sont installés entre les modules (3) de levage, à déplacement motorisé, jusqu'au dernier module tracteur (2) de levage, à déplacement motorisé au sol, des liens d'entrainement flexibles (1). Ils permettent le couplage énergétique, soit électrique et pneumatique, vide compris, soit électrique et hydraulique, de tous les modules de levage et de déplacement répartis sur chaque lien.

Dans le cas de l'usage d'un moteur (4) en version électrique pour le déplacement relatif par rapport au lien d'entrainement flexible (1), le actionneur (30) et son bloc d'alimentation (29) du levage de chaque module, pourrait seul utiliser les deux voies à fluide des mécanismes d'alimentation (11) et (12). Dans l'une des voies, le fluide utilisé pourrait être de l'air comprimé. La seconde voie pourrait être une voie pour le vide. L'intérêt de cette solution est grand, car l'étanchéité des liaisons articulées entre les bras latéraux (13) et les bras centraux (14) obtenues par les vis creuses (18) et les boulons creux (17) ne serait plus un problème critique et n'aurait pas de conséquences sur l'environnement.

Dans le cas de l'usage de motorisation par fluide, pour le moteur (4), l'outillage de levage, dont fait partie le actionneur (30), son bloc d'alimentation (29) et le moteur à fluide (4), pour le déplacement motorisé des modules (3), jusqu'au moteur (23) des modules tracteurs (2), à déplacement motorisé au sol, peuvent être alimentés par une source commune hydraulique. Dans ce cas, l'une des voies serait l'alimentation en moyenne pression, l'autre utilisée pour le retour à la centrale hydraulique.

Fig. 16 : cette figure est importante pour représenter l'ensemble des liens énergétiques installés hors ou dans les modules (3) de levage, à déplacement relatif motorisé. On y voit les principaux outillages alimentés en énergie des dits modules (3), blocs (29) d'alimentation des vérins, moteurs à fluides (4). Ces outillages sont reliés ensemble par les mécanismes d'alimentation et de couplage (11) et (12), ainsi que par les tuyaux (44) internes aux modules (3). On y voit également les électrovannes miniatures (45) qui pilotent chaque distributeur intégré aux outillages.

Planche 6/6 :

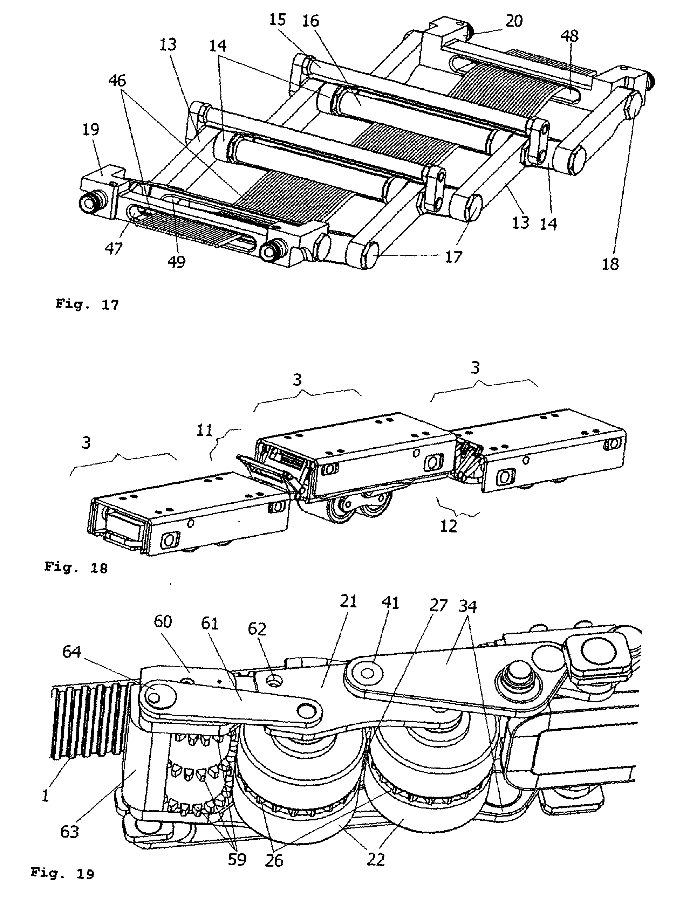

Fig. 17 : la figure représente un mécanisme d'alimentation (12) dans lequel passe une nappe (46) de fils électriques pour la commande et le contrôle de fonctionnement des outillages. Les orifices de passage de la bande (46), respectivement (47) dans le coupleur (19), puis (48) dans le coupleur (20) et (49) dans le bras central (14), doivent laisser également passer les connecteurs placés extrémités de la dite nappe, d'où leur large ouverture. Les plis formés de la bande sont reformés en ordre à chaque nouveau pliage du mécanisme (12) commandé par le rapprochement de deux modules (3) de part et d'autre dudit mécanisme (12). La nappe électrique (46), liaison énergétique de contrôle et de commande des différents modules, reçoit et transmet toutes les informations électriques nécessaires au fonctionnement à partir d'une extrémité en liaison avec une partie commande. Par son intégration, cette nappe (6) est ainsi protégée pendant l'usage des liens d'entrainement flexibles. Cette disposition est reprise également pour le mécanisme d'alimentation (11) dont le fonctionnement est identique.
Fig. 18 : la figure représente trois modules (3) de levage, à déplacement relatif motorisé par rapport aux liens d'entrainement flexibles (1), ici non représentés, reliés par des mécanismes d'alimentation de type (11), modèle court, ou (12), modèle plus long. Les modules (3) de levage ont été placé dans une position extrême, en hauteur pour celui du milieu, en position basse pour les autres, pour montrer la capacité des mécanismes d'alimentation (11) et (12) à s'adapter aux différences de hauteur des modules qu'ils relient. Le découplage mécanique est obtenu facilement par les différentes articulations horizontales des mécanismes (11) et (12), notamment en ce qui concerne les flexions autorisées, les moments d'axe horizontal perpendiculaire à la direction principale de la courroie n'étant pas transmis. L'occurrence d'atteindre une telle différence de hauteur dans un usage normal est peu probable car tous les modules de levage (3), équipant un même lien d'entrainement flexible (1) sont en position basse ou haute simultanément, d'ailleurs aidés en cela dans la synchronisation des changements de position, par les mécanismes d'alimentation, capables d'une assistance en couplage vertical d'effort, mais pas en moment d'axe horizontal.
Fig. 19 : cette figure montre une version différente du module tracteur (2) de levage, à déplacement motorisé au sol, dans laquelle on a cherché à combiner les avantages de la motorisation des modules (3) de levage, à déplacement relatif par rapport au lien d'entrainement flexible (1). Le bloc moteur basculant (60) est articulé sur le boggie (21) par l'axe (62). Cette articulation permet au dit moteur (60) d'engrener son rotor (59) soit sur le lien d'entrainement flexible (1), soit sur le pignon (26) du train de roulettes (22) appartenant au boggie (21).

Dans la position d'entrainement relatif par rapport au lien d'entrainement flexible (1), l'actionneur (63) de l'excentrique de basculement (64) éloigne le rotor (59) des dents du pignon (26) et engrène le dit rotor sur les dents du lien d'entrainement flexible.

Dans la position d'entrainement du module (2) par rapport au sol, on retrouve l'engrènement du rotor (59), avec le pignon (26).

C'est l'excentrique (64) et la bielle (61) qui permettent cet éloignement ou ce rapprochement. En position module tracteur (2) levé, quand les palettes sont soulevées, la motorisation au sol est la seule possible, dans cette version. L'autre n'est d'ailleurs plus utile pour placer le module (2) par rapport aux liens d'entrainement flexibles (1)

L'application industrielle majeure réalisable à partir du dispositif décrit ci-dessus concerne la réception et le départ des marchandises à partir d'un entrepôt doté de quai de chargement et de déchargement.

Lorsqu'un camion ou autre véhicule de transport accoste par l'arrière au quai, après ouverture des portes, il y a mise à niveau du plancher du camion par rapport au quai, pour que les chariots ou transpalettes viennent prendre une par une ou deux par deux les palettes du chargement.

Commence alors un ballet d'allers et retours au mieux presque aussi nombreux que les palettes. Idem pour recharger le camion. D'où un temps d'immobilisation du véhicule de transport routier et un grand nombre d'opérations liées à la main d'oeuvre.

La solution décrite dans le document FR 2890064 était également destinée à résoudre ce problème. La présente description du dispositif de manutention motorisé horizontale et collective de palettes vient compléter utilement la description d'usage déjà décrite dans le document FR 2890064.

Avec le présent dispositif décrit, lors d'une opération de chargement de palettes dans un véhicule de transport, les palettes étant alignées en rangées droites sur le quai de chargement, face à l'arrière du véhicule de transport, l'opération consiste à sortir les liens d'entrainement flexibles (1) d'un magasin porté par un véhicule tracteur, les dits liens (1) étant équipés des modules (2) terminaux de levage, à déplacement motorisé au sol, et des modules (3) de levage, à déplacement relatif motorisé par rapport au lien d'entrainement (1), pour les introduire simultanément par paire, sous une rangée de palettes, introduction aidée par le travail moteur des modules tracteurs (2) s'engageant jusqu'à la dernière palette. Une fois cette opération effectuée. De ce fait, le véhicule tracteur n'a plus à pousser véritablement les modules tracteurs (2) ou les modules (3) de levage à déplacement sous les palettes. Ensuite le positionnement individuel des modules (3) peut commencer, aidé en cela par des capteurs disposés sur les dits modules, détectant bords ou traverses, comme peut le faire un système automatisé. Pour se positionner, chaque module (3) utilise alors son moteur (4) pour se déplacer par rapport au lien (1), lien qui peut être tendu entre le véhicule tracteur et le module tracteur (2) qui le maintient en tension par son moteur (23), agissant sur les toutes les roulettes (22) en appui au sol. Cet appui serait d'autant plus important qu'un levage anticipé de la première palette au-dessus du module tracteur (2) serait enclenché, pour obtenir une meilleure adhérence au sol de ses roulettes (22). Tendu entre le véhicule tracteur et la première palette, le lien d'entrainement flexible (1) sert de crémaillère fixe pour permettre le positionnement aisé des différentes palettes par les modules (3) groupés sous chacune d'elle par deux ou trois, ou même davantage, selon le format des palettes et leur orientation, étant entendu que les formats et l'orientation sont homogènes sur une rangée. Une fois placés les modules (3), le levage collectif peut commencer, que les palettes soient espacées ou non. Une fois les palettes levées, le lien (1) étant toujours tendu, il est alors possible d'utiliser collectivement les moteurs (4) des modules (3) disposés sous une même palette, pour la déplacer par rapport à ses voisines, indépendamment d'elles, les moteurs n'ayant alors en charge, que la seule palette soulevée par leurs modules (3). On peut rapprocher raisonnablement les palettes dans le but de les faire entrer dans le véhicule de transport. S'il y a une rampe, on peut demander aux premiers modules tracteurs (2) de faire monter la palette sur la rampe d'accès. La poussée du véhicule tracteur à l'arrière peut éventuellement l'y aider, si les palettes sont jointives ou presque et si les moteurs de déplacement relatifs concourent à pousser la palette par les liens (1).

Mais, on peut aussi utiliser en plus des modules tracteurs (2), solidaires du début du lien d'entrainement (1), des modules tracteurs (2) à motorisation mixte, dans lesquels, après le levage des palettes, on aura basculer le moteur (60) engrené préalablement sur le lien d'entrainement flexible, vers l'entrainement des boggies (21). De la sorte, en remplaçant les modules (3) non moteur au sol par ces modules tracteurs (2) à motorisation mixte, l'ensemble des palettes deviennent mobiles.

Dans un mode simplifié de réalisation de la motorisation au sol des boggies, dans lequel les roulettes (22) équipant les boggies des modules tracteurs (2) de levage et les modules (3) de levage à déplacement relatif motorisé, seraient toutes équipées de moteurs internes, l'ensemble des palettes deviennent mobiles au sol soit collectivement, soit individuellement par groupe de modules (3) placé sous chacune.

D'autres combinaisons sont également envisageables, par exemple celle qui alternerait l'usage sur un même lien (1) d'un module tracteur (2) et d'un module (3) couplés sous les mêmes palettes, afin d'obtenir les avantages de mobilité par rapport au lien d'entrainement flexible (1) et de motricité par rapport au sol dans les configurations de chargement - déchargement, l'avantage aussi de la simplicité de le commande, les dits moteurs respectifs de ces modules pouvant être directement commandés selon la référence de déplacement choisie, sans basculement de fonction.

Franchir une rampe pour la première palette et les suivantes paraît donc possible dans ce cas, sans poussée à l'arrière par un véhicule.

Au déchargement, l'opération semble plus simple, puisque l'introduction des liens d'entrainement (1) équipés des modules (2) et (3) se fait de la même manière. De même, l'opération de positionnement des modules (3) est identique à celle du chargement. Une fois levées, les palettes peuvent être tractées directement grâce à un véhicule tracteur, tirant sur la paire de liens d'entrainement (1), rendus solidaires des modules (3) par les plaques freins (50) de chaque module (3), puis, après déblocage du dit frein, peuvent être espacées ensuite sur la quai grâce aux moteurs (4) des modules (3) ayant pris en charge une palette. La séparation des palettes à l'intérieur du véhicule est également possible par le même procédé, ce qui facilite grandement le déchargement.

## Revendications

1. Dispositif de manutention motorisée horizontale et collective de palettes pour charger ou décharger les véhicules de transport, **caractérisé en ce qu'**il comprend au moins deux liens d'entrainement flexibles (1), dentés ou crantés, introduits en parallèle simultanément sous une même rangée de palettes alignées, chacun par au moins un module tracteur (2) de levage, à déplacement motorisé au sol, les dits modules (2) déplaçant les liens d'entrainement flexibles (1) au moins par leur extrémité libre, lesdits liens d' entrainement étant, en outre, équipés chacun d'au moins un module (3) de levage à déplacement relatif motorisé, chacun desdits modules (2) ou (3) comportant en propre pour cela, en première part, un moyen de levage motorisé (34, 31, 33, 30), en seconde part, un moyen moteur de déplacement (23) ou (4), en troisième part pour lesdits modules (3), une plaque frein (50), pour freiner ou stopper sur les liens flexibles (1) le déplacement relatif desdits modules (3), se déplaçant de manière individuelle et indépendante des autres modules (3), pour les positionner sous chacune des palettes à déplacer et pour régler individuellement leur distance mutuelle, l'ensemble des moyens moteurs (23,4), des plaques freins (50) desdits modules (3) portant une même palette, concourant au déplacement motorisé de celle-ci, indépendamment des palettes voisines, ou au déplacement collectif des palettes solidaires des liens d'entrainement flexibles (1), éventuellement par traction sur les dits liens d'entrainement (1).

2. Dispositif selon la revendication n°1, **caractérisé en ce que** chaque lien d'entrainement flexible (1) est constitué d'au moins un lien au moins souple verticalement, présentant des obstacles selon un pas régulier, capable de flexions cumulées d'axe horizontal perpendiculaire à la direction longitudinale du lien, lui-même longitudinalement rigide en traction et torsion, autorisant par lesdites flexions, des décalages parallèles verticaux et des inclinaisons, entre plans de palettes voisines d'une part, et d'autre part, limitant tout allongement longitudinal et toute déviation angulaire d'axe vertical perpendiculaire qui pourraient modifier la direction de déplacement des modules (2) et (3) de la rangée de palettes supportées par rapport à la direction générale du chargement.

3. Dispositif selon les revendications n° 1 ou n°2, **caractérisé en ce que** chaque module (3) de levage, à déplacement relatif motorisé par rapport au lien d'entrainement flexible (1), comporte un moyen moteur de déplacement (4) animant en rotation un rotor (5) comprenant au moins une roue à denture extérieure, s'engrenant dans la denture d'au moins un lien d'entrainement flexible (1) guidé longitudinalement dans la poutre supérieure (6) dudit module (3) qu'il traverse, pour l'entrainer en translation relative par rapport au dit lien d'entrainement flexible (1).

4. Dispositif selon l'une quelconque des revendications n°1 à n°3, **caractérisé en ce que** chaque module (3) de levage à déplacement relatif motorisé, constitué d'une poutre supérieure (6) portante et d'une poutre inférieure (28) parallèle formant ensemble une structure expansible verticalement, comprend, d'une part, un moyen de levage motorisé (34,35,33,32,31,30) commandant la sortie inférieure d'un boggie articulé (40), le dit moyen étant équipé d'au moins une genouillère (31, 32), celle-ci étant en appui sur la poutre inférieure (28) pour basculer en sortie ledit boggie (40), par un actionneur (30) également en appui sur la poutre inférieure (28), provoquant par son expansion verticale entre les dites poutres inférieure (28) et supérieure (6), une course dans la genouillère (31, 32), actionnée par un axe de pivot (39), commun à une coulisse (33) glissant dans la poutre supérieure (6), la dite coulisse reprenant la dite course jusqu'à arc-boutement de la genouillère (31,32) pour amplification d'effort et maintien du levage, obtenant ainsi le levage amplifié du module (3) par rapport à la course interne de l'actionneur (30) dans un rapport proche de 2,5.

5. Dispositif selon l'une quelconque des revendications précédentes, **caractérisé en ce que** chaque module tracteur (2) de levage, à déplacement motorisé au sol, équipant les extrémités des liens d'entrainement flexibles (1), comporte au moins un boggie motorisé (21), articulé horizontalement sur un moyen de levage (34,33,31,32,30) semblable à ceux des modules (3) de levage, à déplacement relatif motorisé, le dit boggie (21) supportant d'une part, un moyen moteur (23, 24, 22, 26, 27) dudit boggie motorisé (21), actionnant d'une part au moins une roulette (22) dudit boggie (21), pour motoriser au sol, le module tracteur (2) en appui sur lesdites roulettes (22), et actionnant éventuellement d'autre part une molette à denture pointue (25), la dite molette (25) s'appuyant sur le dessus des traverses au sol qui se présenteraient à elle pour aider les dites roulettes (22) du boggie (21) du module tracteur (2), au franchissement desdites traverses.

6. Dispositif selon l'une quelconque des revendications précédentes, **caractérisé en ce que** chaque module (3) de levage, à déplacement relatif motorisé par rapport au lien d'entrainement flexible (1), contient un moyen de freinage (50) guidé dans le module (3) perpendiculairement au dit lien (1) et dont la commande en translation freine ou stoppe le déplacement relatif du module (3) par rapport au dit lien (1) qui le traverse, lui-même en appui guidé par rapport module (3), solidarisant ledit lien (1) avec le module (3) ou à l'inverse, autorisant son déplacement relatif par rapport au dit module (3), selon la position commandée du dit moyen de freinage (50).

7. Dispositif selon l'une quelconque des revendications précédentes, **caractérisé en ce que** chaque lien d'entrainement flexible (1) comporte, en plus des modules tracteurs (2) de levage, à déplacement motorisé au sol et des modules (3) de levage, à déplacement relatif motorisé, au moins un moyen d'alimentation (11,13,14), formant un ensemble librement pliable ou dépliable, longitudinalement fixé par un moyen de couplage (19,20) entre les modules (3) de levage, à déplacement relatif motorisé, permettant le couplage énergétique et informatique des dits modules (3) de levage entre eux, dans leur répartition le long des liens d'entrainement flexibles (1), les dits moyens d'alimentation (11,13,14) et de couplage (19,20), permettant par leur encombrement variable de couvrir les distances variables entre lesdits modules.

8. Dispositif selon l'une quelconque des revendications précédentes, **caractérisé en ce que** chaque moyen d'alimentation (11,13,14) comporte, en outre, au moins un guide-support (15,16) dans lequel passe librement le lien d'entrainement flexible (1), celui-ci limitant ainsi, par sa tension, les déplacements verticaux du moyen d'alimentation (11,13,14), sur la distance séparant les modules (3) de levage, à déplacement motorisé.

9. Dispositif selon l'une quelconque des revendications précédentes, **caractérisé en ce que** chaque moyen d'alimentation (11,13,14) et chaque moyen de couplage (19,20) comporte des orifices oblongs centraux (47,48,49) pour assurer et protéger le passage d'une nappe de fils électriques (46) et de ses connecteurs aux modules (3) de levage, à déplacement relatif motorisé, aux modules tracteur (2) de levage, à déplacement motorisé au sol, ladite nappe de fils (46) étant destinée à la commande des dits modules, au contrôle de leur fonctionnement, à l'alimentation et au retour des informations des capteurs disséminés dans les dits modules répartis le long des liens d'entrainement (1).

10. Dispositif selon l'une quelconque des revendications précédentes, dans un mode différent de réalisation, **caractérisé en ce que** le module tracteur (2) de levage, à déplacement motorisé par rapport au sol, comporte un moteur basculant (60) articulé par un axe (62) sur le boggie (21), le dit moteur basculant (60) étant équipé d'une part, d'un rotor (59) qu'il anime en rotation, et d'autre part, d'une commande de position (63), ledit moteur (60) pouvant occuper par ladite commande de position (63), deux positions stables et distinctes d'entrainement, une première position permettant le déplacement relatif du module (2) de levage par rapport au lien d'entrainement flexible (1), quand le rotor (59) est engrené dans la denture dudit lien (1), une seconde position permettant le déplacement du module (2) de levage par rapport au sol, quand le rotor (59) entraine les roulettes (22) du boggie (21) porteur du module (2), le changement du type de déplacement étant commandé à distance.

11. Dispositif selon l'une quelconque des revendications précédentes, **caractérisé en ce que** dans un mode particulier de réalisation, chaque boggie (21) porteur des modules tracteurs (2) de levage, à déplacement motorisé au sol, ou chaque boggie (40) porteur des modules (3) à déplacement relatif par rapport au lien flexible (1), comprend au moins un moyen moteur intégré à l'intérieur d'au moins une roulette (22) desdits boggies, pour entrainer les dits modules (2) ou (3) par rapport au sol, pour déplacer selon les besoins, collectivement ou indépendamment les uns des autres, les différents modules installés sur le lien flexible d' entrainement (1).
